(19) Europäisches Patentamt
European Patent Office
Office européen des brevets

(11) **EP 2 428 012 B1**

## (12) FASCICULE DE BREVET EUROPEEN

(45) Date de publication et mention
de la délivrance du brevet:
**12.03.2014 Bulletin 2014/11**

(21) Numéro de dépôt: **10722977.5**

(22) Date de dépôt: **04.05.2010**

(51) Int Cl.:
**H04L 27/26** *(2006.01)*

(86) Numéro de dépôt international:
**PCT/EP2010/056053**

(87) Numéro de publication internationale:
**WO 2010/128057 (11.11.2010 Gazette 2010/45)**

(54) **Réduction du rapport puissance crête à puissance moyenne dans un signal multiporteuse**

Verringerung des Verhältnisses von Spitzen-zu-Durchschnittsleistung in einem Mehrträgersignal

Peak-to-average power ratio reduction in a multicarrier signal

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.05.2009 FR 0952964**

(43) Date de publication de la demande:
**14.03.2012 Bulletin 2012/11**

(73) Titulaires:
• **Institut National des Sciences Appliquées de Rennes**
  **35708 Rennes Cedex 7 (FR)**
• **CNRS Centre National de la Recherche Scientifique**
  **75794 Paris Cedex 16 (FR)**

(72) Inventeurs:
• **HELARD, Jean-François**
  **F-35700 Rennes (FR)**
• **LOUET, Yves**
  **F-35830 Betton (FR)**
• **MASINJARA MAHAFENO, Irène**
  **F-31830 Plaisance du Touch (FR)**

(74) Mandataire: **Bioret, Ludovic**
  **Cabinet Vidon**
  **16 B, rue de Jouanet - B.P. 90333**
  **35703 Rennes Cedex 07 (FR)**

(56) Documents cités:
• **MAHAFENO I M ET AL: "PAPR reduction method for OFDM systems using dedicated subcarriers: a proposal for the future DVB-T standard" BROADBAND MULTIMEDIA SYSTEMS AND BROADCASTING, 2008 IEEE INTERNATIONAL SYMPOSIUM ON, IEEE, PISCATAWAY, NJ, USA, 31 mars 2008 (2008-03-31), pages 1-3, XP031268626 ISBN: 978-1-4244-1648-6**
• **YVES LOUET ET AL: "PMEPR mitigation using adjacent bands of standards under spectrum mask constraint" WIRELESS CONFERENCE, 2008. EW 2008. 14TH EUROPEAN, IEEE, PISCATAWAY, NJ, USA, 22 juin 2008 (2008-06-22), pages 1-4, XP031320056 ISBN: 978-3-8007-3102-2**
• **MAHAFENO I M ET AL: "Peak-to-average power ratio reduction using second order cone programming based tone reservation for terrestrial digital video broadcasting systems", IET COMMUNICATIONS,, vol. 3, no. 7, 6 July 2009 (2009-07-06), pages 1250-1261, XP006033378, ISSN: 1751-8636, DOI: 10.1049/IET-COM: 20080372**
• **ANH TAI HO ET AL: "A novel combined PAPR reduction and channel estimation approach for OFDM systems", BROADBAND MULTIMEDIA SYSTEMS AND BROADCASTING (BMSB), 2010 IEEE INTERNATIONAL SYMPOSIUM ON, IEEE, PISCATAWAY, NJ, USA, 24 March 2010 (2010-03-24), pages 1-5, XP031675535, ISBN: 978-1-4244-4461-8**

- SIDKIETA ZABRE ET AL: "SOCP Approach for OFDM Peak-to-Average Power Ratio Reduction in the Signal Adding Context", SIGNAL PROCESSING AND INFORMATION TECHNOLOGY, 2006 IEEE INTERNATIONAL SYMPOSIUM ON, IEEE, PI, 1 August 2006 (2006-08-01), pages 834-839, XP031002542, ISBN: 978-0-7803-9753-8
- AGGARWAL A ET AL: "Minimizing the peak-to-average power ratio of OFDM signals via convex optimization", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 4, 1 December 2003 (2003-12-01), pages 2385-2389, XP010677782, DOI: 10.1109/GLOCOM.2003.1258662 ISBN: 978-0-7803-7974-9
- AGGARWAL A ET AL: "A convex interior-point method for optimal OFDM PAR reduction", COMMUNICATIONS, 2005. ICC 2005. 2005 IEEE INTERNATIONAL CONFERENCE ON SEOUL, KOREA 16-20 MAY 2005, PISCATAWAY, NJ, USA, IEEE, vol. 3, 16 May 2005 (2005-05-16), pages 1985-1990, XP010826219, DOI: 10.1109/ICC. 2005.1494686 ISBN: 978-0-7803-8938-0

**Description**

1. Domaine de l'invention

Le domaine de l'invention est celui de la transmission de signaux numériques, que ce soit sur les canaux de transmission à trajets multiples, ou sur des canaux dits « mono-trajet », comme ceux des liaisons satellites sans écho notamment.

Plus précisément, l'invention concerne les techniques de modulation multiporteuse, notamment de type OFDM (« *Orthogonal Frequency Division Multiplex* » en anglais, pour « multiplexage par répartition orthogonale en fréquence »). La modulation OFDM est de plus en plus utilisée pour la transmission numérique, en particulier sur les canaux de transmission à trajets multiples. Cette technique de modulation multiporteuse permet notamment de s'affranchir de l'interférence entre symboles généralement observée lorsqu'on utilise une modulation monoporteuse sur un canal à trajets multiples.

Du fait de sa robustesse intrinsèque aux canaux sélectifs en fréquence, la modulation OFDM est notamment, mais non exclusivement, utilisée dans les réseaux locaux sans-fil (WiFI ou WiMAX), ou encore l'ADSL (de l'anglais « *Asymmetric Digital Subscriber Line* ») et l'HIPERLAN/2 (de l'anglais « *HIgh PErformance Radio Local Area Network* »), mais aussi pour des standards tels que ceux relatifs à la diffusion Audio Numérique (DAB pour *« Digital Audio Broadcasting* » en anglais), la diffusion Vidéo Numérique (DVB pour *« Digital Video Broadcasting* » en anglais, notamment DVB-T (une norme de la télévision numérique terrestre) ou le nouveau standard DVB-T2 ou encore DVB-NGH (de l'anglais « DVB - *Next Generation Handheld»,* une norme de diffusion vidéo destinée à une réception sur terminal mobile).

**2. Art antérieur**

**2.1 Inconvénients de la modulation OFDM**

Un inconvénient majeur de la technique OFDM est inhérent aux fortes fluctuations en amplitude de l'enveloppe du signal modulé et donc aux variations importantes de la puissance instantanée.

Le rapport puissance crête à puissance moyenne (PAPR, pour « *Peak to Average Power Ratio* » en anglais) des signaux émis est ainsi généralement très élevé et il augmente avec le nombre de sous-porteuses $N$.

Les amplificateurs de puissance présentent des caractéristiques non-linéaires qui, couplées à l'amplification des signaux dits à fort PAPR conduisent à des distorsions : remontée spectrale du niveau des lobes secondaires, génération d'harmoniques, création d'interférences entre symboles non linéaires, création d'interférences entre porteuses. Ainsi, ces distorsions entraînent notamment des erreurs de transmission et une dégradation du taux d'erreur binaire (TEB).

**2.2 Art antérieur pour la réduction du PAPR**

Dans la littérature, de nombreuses techniques ont déjà été proposées pour pallier ce problème.

Une solution courante consiste à s'assurer que la plage de fonctionnement de l'amplifcateur reste limitée à une zone d'amplification linéaire, ce qui limite malheureusement le rendement de l'amplificateur (quelques % au lieu de, classiquement, 50 %) et donc une augmentation importante de la consommation de l'émetteur. Ceci est une contrainte très forte pour l'utilisation de l'OFDM notamment dans les terminaux mobiles, sachant que la consommation de l'amplificateur de puissance peut représenter plus de 50% de la consommation totale d'un terminal.

Une deuxième approche est la technique de « *clippitig* », ou limiteur, qui consiste à écrêter l'amplitude du signal lorsqu'il dépasse un seuil prédéfini. Mais cet écrêtage est par nature non linéaire et introduit une distorsion du signal émis se traduisant non seulement par un TEB dégradé mais également par une remontée des lobes secondaires de la DSP (Densité Spectrale de Puissance).

Une troisième technique, appelée « *Selected Mapping* », consiste à appliquer à chaque symbole de la séquence à transmettre une rotation de phase. Plusieurs motifs de rotation de phase peuvent être définis. Pour chaque motif appliqué à la séquence à transmettre, on effectue les opérations pour obtenir un signal OFDM correspondant, et on transmet celui présentant le plus faible PAPR. De nouveau cette technique n'apporte pas de distorsion, mais elle nécessite de communiquer au récepteur la séquence de rotation utilisée à l'émission avec une très grande fiabilité, ce qui conduit à une réduction de l'efficacité spectrale et une augmentation significative de la complexité du système pour acheminer le numéro du motif utilisé via un canal dédié. En outre, si cette transmission est erronée, toute la trame OFDM sera perdue. Elle augmente également la complexité à l'émission, puisque plusieurs traitements doivent être effectués en parallèle, pour choisir ensuite le plus efficace. Les autres traitements ont été effectués inutilement, et ne sont pas exploités.

**EP 2 428 012 B1**

Une quatrième méthode, appelée communément « technique TR (*Tone Reservation*) », propose de réserver certaines sous-porteuses du multiplex OFDM, qui ne transportent pas d'informations mais des symboles optimisés à l'émission pour réduire le PAPR. L'optimisation de ces symboles peut être effectuée en utilisant par exemple un algorithme d'optimisation convexe de type SOCP (*Second Order Cone Programming*) comme dans le document:

MAHAFENO I M ET AL: "PAPR réduction method for OFDM systems using dedicated subcarriers: a proposal for the future DVB-T standard", BROADBAND MULTIMEDIA SYSTEMS AND BROADCASTING, 2008 IEEE INTERNATIONAL SYMPOSIUM ON, IEEE, PISCATAWAY, NJ, USA, 31 mars 2008 (2008-03-31), pages 1-3, ISBN: 978-1-4244-1648-6.

Tout comme la méthode précédente, cette solution n'apporte pas de distorsion au signal émis, mais un inconvénient majeur de cette méthode réside dans le fait qu'un certain nombre de porteuses, doivent être réservées pour pouvoir réduire le PAPR de façon significative. Ces porteuses ne sont pas utilisées pour émettre des données d'informations utiles, ce qui conduit à une réduction de l'efficacité spectrale.

Cette réduction de l'efficacité spectrale peut être résolue par l'utilisation des porteuses dites « pilotes », initialement dédiées à l'estimation de canal, pour la réduction du PAPR, avec en réception une détection dite « en aveugle », comme proposé dans le document « Peak Power Reduction for OFDM Systems With Orthogonal Pilot Sequence » (M.J. Fernaudez-Getino Garcia, O. Edfors, J.M. Paez-Borrallo, IEEE Transactions on Wireless Communications, Volume 5, Jan. 2006 Page(s): 47 - 51).

Ce document décrit une telle technique appliquée à des séquences de pilote orthogonales, en particulier des séquences de Walsh-Hadamard, ce qui impose en conséquence le choix de porteuses pilotes dans un ensemble de deux valeurs distinctes (-1 et 1) prédéfinies à l'émission, de façon que les séquences soient orthogonales entre elles.

Cependant l'efficacité d'une telle technique est limitée. En effet, cette technique impose à l'émission un choix limité de modifications de porteuses pilotes dans un ensemble de valeurs prédéfinies, limitant ainsi les performances de cette technique en termes de réduction du PAPR. En effet, les porteuses pilotes modifiées par cette technique sont celles qui réduisent au mieux le PAPR, parmi des valeurs prédéfinies, et non celles qui réduisent de façon optimale le PAPR.

### 3. Exposé de l'invention

L'invention propose une solution nouvelle qui ne présente pas l'ensemble de ces inconvénients de l'art antérieur, sous la forme d'un procédé de transmission multiporteuse d'un signal représentatif d'un signal source, comprenant des symboles constitués d'un ensemble de sous-porteuses, destinées à être émises simultanément et comprenant des sous-porteuses pilotes destinées à au moins un traitement d'aide au et/ou d'amélioration du décodage dans au moins un récepteur, et des sous-porteuses de données, l'emplacement dans l'espace temps-fréquence et une valeur de référence desdites sous-porteuses pilotes étant connus du ou des récepteurs.

Selon l'invention, le procédé comprend une phase de modification, pour un symbole donné, de la valeur de référence d'au moins un sous-ensemble desdites sous-porteuses pilotes, à l'aide d'une donnée de correction de la phase et/ou de l'amplitude pour chacune desdites sous-porteuses pilotes dudit sous-ensemble, de façon à minimiser le rapport puissance crête à puissance moyenne, lesdites données de correction prenant au moins trois valeurs distinctes, la transition entre les valeurs de deux sous-porteuses pilotes successives dudit sous-ensemble selon l'axe fréquentiel étant constante.

Le procédé selon l'invention peut notamment, mettre en ouvre une loi de transition multiplicative ou additive.

Ainsi, l'invention repose sur une approche nouvelle et inventive de la transmission d'un signal. visant à améliorer la technique de réservation de sous-porteuses appelée communément «technique TR » (de l'anglais « *Tone Reservation* »), sans ajout de sous-porteuses pilotes supplémentaires. Pour cela, l'invention utilise, pour la réduction du PAPR, des sous-porteuses pilotes par ailleurs déjà dédiées à une fonction propre, lesdites sous-porteuses pilotes étant modifiées de manière à optimiser cette réduction du PAPR au moyen d'au moins trois valeurs distinctes de données de correction. Cette modification est apportée, bien sûr, de façon que les traitements d'aide au et/ou d'amélioration du décodage auxquels étaient initialement dédiées les sous-porteuses pilotes, tels que la synchronisation ou l'estimation de canal, soient toujours optimaux.

Par sous-porteuses pilotes, on entend ainsi, notamment, les sous-porteuses appartenant au groupe des :

- sous-porteuses pilotes dédiées à la synchronisation ;
- sous-porteuses pilotes dédiées à l'estimation de canal ;
- sous-porteuses de signalisation, dites "sous-porteuses TPS", ("*Transmission Parameters Signaling*" ou "signalisation des paramètres de transmission") qui sont des sous-porteuses particulières contenant des informations comprenant, entre autres, le type de modulation, le mode de transmission et le rendement de codage ;

- etc.

Selon un mode de réalisation du procédé de transmission, ledit sous-ensemble desdites sous porteuses pilotes comprend des sous-porteuses pilotes dédiées à l'estimation de canal. En d'autres termes, l'invention permet d'utiliser les mêmes (ou une partie des mêmes) sous-porteuses pilotes pour la réduction du PAPR et l'estimation du canal de transmission évitant ainsi une réservation supplémentaire de sous-porteuses autres que les sous-porteuses pilotes existantes.

Selon d'autres modes de réalisation possibles, d'autres sous-porteuses pilotes dédiées à une fonction différente de l'estimation de canal peuvent également être utilisées.

La méthode selon l'invention propose en outre de déterminer des données de correction dans un ensemble de valeurs non prédéfinies, calculées par un algorithme d'optimisation visant à réduire le PAPR pour l'émission de chaque symbole OFDM à émettre et non connus du récepteur.

Ainsi, à l'encontre des habitudes de l'Homme du Métier, l'invention propose d'utiliser au moins trois valeurs distinctes de données de correction de la phase et/ou de l'amplitude pour chacune desdites sous-porteuses pilotes dédiées à l'estimation de canal et non des séquences de pilotes qui imposent le choix de sous-porteuses pilotes dans un ensemble de deux valeurs distinctes (-1 et 1) prédéfinies à l'émission.

En d'autres termes, l'invention vise à augmenter de manière optimale le gain en réduction du PAPR, en ne se limitant pas à des séquences de pilotes de puissance constante.

Par ailleurs, la méthode mise en oeuvre peut également ne pas s'appliquer à toutes les sous-porteuses pilotes dédiées à l'estimation de canal, mais un sous-ensemble desdites sous-porteuses pilotes dédiées à l'estimation de canal. Par exemple, on peut appliquer une correction à une sous-porteuse pilote, les deux suivantes dans le spectre fréquentiel restant invariantes.

De façon préférentielle, le procédé comprend également les étapes suivantes :

- détermination desdites données de correction, comprenant au moins, pour un symbole donné :

  - une sous-étape de calcul d'un paramètre de correction initial appliqué à une première sous-porteuse pilote dédiée à l'estimation de canal $P_0$ selon l'axe fréquentiel dudit sous-ensemble desdites sous-porteuses pilotes dédiées à l'estimation de canal, et/ou
  - une sous-étape de calcul d'un paramètre de transition définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal, ledit paramètre de correction initiale et ledit paramètre de transition étant choisis de façon à minimiser le rapport puissance crête à puissance moyenne ;
  - une sous-étape d'obtention desdites données de correction à partir dudit paramètre de correction initiale et dudit paramètre de transition ;

- modification de la valeur de référence desdites sous-porteuses pilotes dédiées à l'estimation de canal en fonction desdites données de correction, fournissant des valeurs corrigées destinées à moduler lesdites sous-porteuses pilotes, dédiées à l'estimation de canal, dudit sous-ensemble.

Avantageusement, ladite sous-étape d'obtention détermine lesdites données de correction en fonction dudit paramètre de correction initiale pour la sous-porteuse pilote dédiée à l'estimation de canal de fréquence la plus faible, et en fonction de la modification appliquée à la sous-porteuse pilote dédiée à l'estimation de canal précédente selon l'axe des fréquences et dudit paramètre de transition, pour les autres sous-porteuses pilotes dédiées à l'estimation de canal.

Selon un mode de réalisation particulier, lesdites données de correction, ledit paramètre de correction initiale et/ou ledit paramètre de transition sont définis avec un pas prédéterminé et/ou choisis parmi un ensemble de valeurs prédéterminées.

Ainsi, si l'on considère des données de correction de la phase desdites sous-porteuses pilotes dédiées à l'estimation de canal, on peut envisager un ensemble de valeurs de correction discrètes variant par exemple de 5° en 5°, ou encore que cet ensemble est choisi dans un ensemble de valeurs entières.

Selon l'invention, ladite transition entre deux desdites sous-porteuses met en ouvre une loi de transition appartenant au groupe comprenant :

- les lois de transition multiplicative,
- les lois de transition additive.

Selon un mode de réalisation préférentiel, l'émetteur et le récepteur peuvent fonctionner avec une unique loi de transition prédéterminée (ladite loi de transition additive ou multiplicative), ne nécessitant pas la mise en oeuvre d'une étape préalable de choix de ladite loi de transition.

Selon un autre mode de réalisation, l'invention met en oeuvre, de manière facultative une étape préalable de choix de ladite loi de transition, pour un symbole donné ou une série de symboles donnée.

Ladite étape préalable de choix de ladite loi de transition délivre une information binaire de choix, et le procédé de l'invention met en oeuvre une étape de transmission de ladite information de choix.

Plus précisément, une loi de transition multiplicative détermine la modification à appliquer à ladite sous-porteuse pilote dédiée à l'estimation de canal $P_{i+1}$ par multiplication d'un paramètre de correction $C_i$ appliqué à ladite précédente sous-porteuse pilote dédiée à l'estimation de canal $P_i$ selon l'axe fréquentiel par ledit paramètre de transition.

En d'autres termes, selon cette première approche, l'invention met en oeuvre une loi de transition multiplicative consistant à multiplier ledit paramètre de correction initial $C_0$ appliqué à la première sous-porteuse pilote dédiée à l'estimation de canal $P_0$ selon l'axe fréquentiel, par une valeur d'optimisation complexe $\Delta_m$ représentant une variation d'amplitude et/ou de phase, délivrant un paramètre de correction $C_1$ appliquée à la deuxième sous-porteuse pilote dédiée à l'estimation de canal $P_1$. La sous-porteuse pilote dédiée à l'estimation de canal $P_2$ étant à son tour calculée par multiplication de $C_l$ par $\Delta_m$, et ainsi de suite pour les sous-porteuses pilotes dédiées à l'estimation de canal suivantes selon l'axe fréquentiel.

Par ailleurs, la loi de transition additive détermine la modification à appliquer à ladite sous-porteuse pilote dédiée à l'estimation de canal $P_{i+1}$ par addition d'un paramètre de correction $C_i$ appliqué à ladite précédente sous-porteuse pilote dédiée à l'estimation de canal $P_i$ selon l'axe fréquentiel par ledit paramètre de transition.

Cette deuxième approche met en oeuvre une loi de transition additive consistant à additionner ledit paramètre de correction initial $C_0$ appliqué à la première sous-porteuse pilote dédiée à l'estimation de canal $P_0$ selon l'axe fréquentiel, à une valeur d'optimisation complexe $\Delta_a$ représentant une variation d'amplitude et de phase, délivrant un paramètre de correction $C_1$ appliquée à la deuxième sous-porteuse pilote dédiée à l'estimation de canal $P_1$. La sous-porteuse pilote dédiée à l'estimation de canal $P_2$ étant à son tour calculée par addition de $C_1$ et de $\Delta_a$, et ainsi de suite pour les sous-porteuses pilotes suivantes selon l'axe fréquentiel.

L'invention concerne également un dispositif de transmission multiporteuse d'un signal représentatif d'un signal source, comprenant des symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur, et des sous-porteuses de données, l'emplacement dans l'espace temps-fréquence et une valeur de référence desdites sous-porteuses pilotes étant connus du ou des récepteurs.

Selon l'invention, le dispositif de transmission comprend des moyens de modification, pour un symbole donné, de la valeur de référence d'au moins un sous-ensemble desdites sous-porteuses pilotes, à l'aide d'une donnée de correction de la phase et/ou de l'amplitude pour chacune desdites sous-porteuses pilotes dudit sous-ensemble, de façon à minimiser le rapport puissance crête à puissance moyenne, lesdites données de correction prenant au moins trois valeurs distinctes, la transition entre les valeurs de deux sous-porteuses pilotes successives dudit sous-ensemble selon l'axe fréquentiel étant constante.

Le dispositif de transmission selon l'invention peut notamment, mettre en oeuvre une loi de transition multiplicative ou additive.

Un tel dispositif de transmission est notamment apte à mettre en ouvre le procédé de transmission selon l'invention tel que décrit précédemment.

L'invention concerne également un signal multiporteuse obtenu par le procédé selon l'invention comprenant des symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données, l'emplacement dans l'espace temps-fréquence et une valeur de référence desdites sous-porteuses pilotes étant connus du ou des récepteurs.

Selon l'invention, un tel signal est tel que, pour un symbole donné, la valeur de référence d'au moins un sous-ensemble de sous-porteuses pilotes est modifiée, à l'aide d'un paramètre de correction de la phase et/ou de l'amplitude de chacune desdites sous-porteuses pilotes dudit sous-ensemble, de façon à minimiser le rapport puissance crête à puissance moyenne, lesdits paramètres de correction prenant au moins trois valeurs distinctes, la transition entre les valeurs de deux sous-porteuses pilotes successives dudit sous-ensemble selon l'axe fréquentiel étant constante.

L'obtention du signal selon l'invention peut notamment, mettre en oeuvre une loi de transition multiplicative ou additive.

Selon un mode de réalisation préférentiel, l'émetteur et le récepteur peuvent fonctionner avec une unique loi de transition prédéterminée (additive ou multiplicative pour l'ensemble des symboles) ne nécessitant pas la transmission d'information supplémentaire.

Selon un autre mode de réalisation, un tel signal comprend, de manière facultative, au moins une information d'aide à la réception, parmi les informatisons appartenant au groupe comprenant :

- une information représentative dudit paramètre de correction initiale ;
- une information représentative dudit paramètre de transition ;
- une information binaire représentative du choix d'une loi de transition entre deux desdites sous-porteuses pilotes dédiées à l'estimation de canal dudit sous-ensemble.

Ainsi, selon ce mode de réalisation particulier le signal peut par exemple comprendre uniquement ladite information binaire représentative du choix d'une loi de transition entre deux desdites sous-porteuses pilotes dédiées à l'estimation de canal dudit sous-ensemble, si l'on vise notamment une estimation « aveugle » à la réception. Le récepteur détermine, sans information supplémentaire transmise, les données de correction des porteuses pilotes.

Selon un mode de réalisation différent, on peut considérer une unique loi de transition prédéterminée au sein de l'émetteur comme du récepteur, ne nécessitant pas de transmission d'une information binaire représentative du choix d'une loi de transition entre deux desdites sous-porteuses pilotes dédiées à l'estimation de canal dudit sous-ensemble, et d'un paramètre de transition fixé à l'émission. Deux variantes de ce mode de réalisation sont possibles, l'une mettant en oeuvre un récepteur connaissant de manière intrinsèque la valeur dudit paramètre de transition, l'autre mettant en oeuvre la transmission d'un signal contenant une information représentative dudit paramètre de transition.

De manière similaire, un autre mode de réalisation peut consister à considérer un paramètre de correction initiale fixe et une unique loi de transition prédéterminée au sein de l'émetteur comme du récepteur, et peut être réalisé sous la forme de deux variantes mettant en oeuvre ou non la transmission d'une information représentative dudit paramètre de correction initiale.

De nombreux autres modes de réalisation, combinant différents modes de réalisations précédemment cités peuvent également être mis en oeuvre selon le procédé de l'invention.

L'invention concerne encore un produit programme d'ordinateur télécliargeable depuis un réseau de communication et/ou enregistré sur un support lisible par ordinateur et/ou exécutable par un processeur. Selon l'invention, ledit produit programme d'ordinateur comprend des instructions de code de programme pour la mise en oeuvre du procédé de transmission décrit ci-dessus, lorsqu'il est exécuté sur un ordinateur.

L'invention concerne également un procédé de réception d'un signal décrit précédemment, émis par au moins un émetteur via un canal de transmission, ledit signal étant formé d'une succession temporelle de symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données, l'emplacement dans l'espace temps-fréquence et une valeur de référence desdites sous-porteuses pilotes étant connus du ou des récepteurs, la valeur de référence d'au moins un sous-ensemble desdites sous-porteuses pilotes étant modifiée, pour un symbole donné, à l'aide d'un paramètre de correction de la phase et/ou de l'amplitude de chacune desdites sous-porteuses pilotes dudit sous-ensemble, de façon à minimiser le rapport puissance crête à puissance moyenne, lesdits paramètres de correction prenant au moins trois valeurs distinctes, la transition entre les valeurs de deux sous-porteuses pilotes successives dudit sous-ensemble selon l'axe fréquentiel étant constante.

Le procédé de réception selon l'invention peut notamment, mettre en oeuvre une loi de transition multiplicative ou additive.

Selon l'invention, le procédé de réception met en oeuvre les étapes suivantes :

- extraction des informations reçues modulant chacune des sous-porteuses dudit sous-ensemble de porteuses ;
- analyse de l'ensemble desdites informations reçues, de façon à déterminer une estimation desdites données de correction ;
- estimation du canal de transmission à partir desdites données de correction.

Ainsi l'invention permet en réception, une estimation dite « à l'aveugle », ne nécessitant pas la transmission d'information supplémentaire selon un mode de réalisation préférentiel de l'invention. L'invention évite ainsi une réduction de l'efficacité spectrale due à la « réservation » de sous-porteuses uniquement dédiées à la réduction du PAPR

Selon l'une, parmi l'ensemble des variantes de mode de réalisation précédemment citées, l'invention permet en réception, une estimation dite « à l'aveugle », ne nécessitant pas la transmission d'information supplémentaire outre l'information binaire représentative du choix d'une loi de transition entre deux desdites sous-porteuses pilotes dudit sous-ensemble.

De manière optionnelle, le procédé de réception, selon un mode de réalisation particulier, met en oeuvre à la suite desdites étapes d'extraction, d'analyse, de modification et d'estimation du canal, l'étape suivante :

- évaluation de l'erreur d'estimation de la modification appliquée audit sous-ensemble desdites sous-porteuses pilotes mettant en oeuvre un calcul de l'erreur quadratique moyenne.

Ce mode de réalisation particulier permet essentiellement d'évaluer les performances du procédé en réception.

Par ailleurs, on peut considérer la transmission d'un symbole dit « nul », afin d'évaluer la valeur exacte de la réponse fréquentielle du canal, et intégrer l'erreur d'estimation pour l'estimation de canal du symbole suivant.

Préférentiellement, ladite étape d'analyse comprend :

- une étape de détermination d'un paramètre de transition définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal, par analyse de l'ensemble des transitions ; et/ou
- une étape de détermination d'un paramètre de correction initiale $C_0$ appliqué à la première sous-porteuse pilote dédiée à l'estimation de canal $P_0$ selon l'axe fréquentiel dudit sous-ensemble desdites sous-porteuses pilotes, en fonction de la valeur d'au moins une desdites sous-porteuses pilotes dédiées à l'estimation de canal dudit sous-ensemble desdites sous-porteuses pilotes et du paramètre de transition ;
- une étape de détermination des paramètres de correction appliqués à toutes les autres sous-porteuses pilotes $P_{i. i\neq0}$ dédiées à l'estimation de canal selon l'axe fréquentiel dudit sous-ensemble desdites sous-porteuses pilotes dédiées à l'estimation de canal, en fonction de la valeur du paramètre de correction initiale $C_0$ appliqué à la première sous-porteuse pilote dédiée à l'estimation de canal $P_0$ et de celle du paramètre de transition.

En outre, au moins une desdites étape de détermination met en oeuvre un moyennage.

Selon un mode de réalisation particulier du procédé de réception, tel que pour au moins une desdites étape de détermination, ledit paramètre de correction initiale et/ou ledit paramètre de transition est défini avec un pas prédéterminé et/ou choisi parmi un ensemble de valeurs prédéterminées.

Ainsi, de manière avantageuse, l'analyse de l'ensemble desdites informations reçues serait simplifiée et accélérée en déterminant par exemple des données de correction de la phase desdites sous-porteuses pilotes dédiées à l'estimation de canal, en envisageant un ensemble de valeurs de correction discrètes variant de 5° en 5°, ou encore un ensemble choisi dans un ensemble de valeurs entières.

Selon un mode de réalisation préférentiel, l'émetteur et le récepteur peuvent fonctionner avec une unique loi de transition prédéterminée (additive ou multiplicative pour l'ensemble des symboles), ne nécessitant pas la transmission d'information supplémentaire.

Selon un mode de réalisation particulier, le procédé de réception selon l'invention, comprend une étape préalable de décodage d'au moins une des informations appartenant au groupe comprenant :

- une information représentative dudit paramètre de correction initiale ;
- une information représentative dudit paramètre de transition ;
- une information binaire représentative du choix d'une loi de transition entre deux desdites sous-porteuses pilotes dudit sous-ensemble.

L'invention concerne également un dispositif de réception d'un signal transmis selon le procédé de transmission de l'invention, émis par au moins un émetteur via un canal de transmission, ledit signal étant formé d'une succession temporelle de symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur, et des sous-porteuses de données, l'emplacement dans l'espace temps-fréquence et une valeur de référence desdites sous-porteuses pilotes étant connus du ou des récepteurs, la valeur de référence d'au moins un sous-ensemble desdites sous-porteuses pilotes étant modifiée, pour un symbole donné, à l'aide d'un paramètre de correction de la phase et/ou de l'amplitude de chacune desdites sous-porteuses pilotes dudit sous-ensemble, de façon à minimiser le rapport puissance crête à puissance moyenne, lesdits paramètres de correction prenant au moins trois valeurs distinctes, la transition entre les valeurs de deux sous-porteuses pilotes successives dudit sous-ensemble selon l'axe fréquentiel étant constante.

Ce dispositif comprend :

- des moyens d'extraction des informations reçues modulant chacune des sous-porteuses dudit sous-ensemble de porteuses ;
- des moyens d'analyse de l'ensemble desdites informations reçues, de façon à déterminer une estimation desdites données de correction ;
- des moyens d'estimation du canal de transmission à partir desdites données de correction.

Le dispositif de réception selon l'invention peut notamment, mettre en oeuvre une loi de transition multiplicative et/ou additive.

L'invention concerne encore un produit programme d'ordinateur téléchargeable depuis un réseau de communication et/ou enregistré sur un support lisible par ordinateur et/ou exécutable par un processeur. Selon l'invention, ledit produit programme d'ordinateur comprend des instructions de code de programme pour la mise en oeuvre du procédé de réception selon l'invention, lorsqu'il est exécuté sur un ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre le schéma général de traitement d'un signal OFDM ;
- la figure 2 illustre les principales étapes d'un procédé de transmission selon l'invention ;
- la figure 3 illustre le signal selon l'invention ;
- la figure 4 illustre les principales étapes d'un procédé de réception selon l'invention.

## 4. Description d'un mode de réalisation de l'invention

### 4.1 Principe général

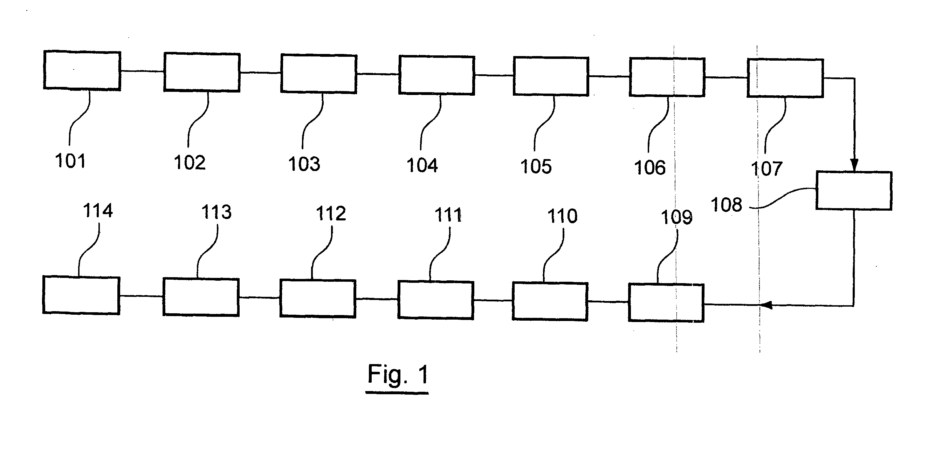

L'invention repose donc sur l'utilisation d'au moins trois valeurs distinctes de données de correction de sous-porteuses pilotes de façon à réduire de façon optimale le rapport puissance crête à puissance moyenne, ou PAPR, lesdites sous-porteuses pilotes étant déjà dédiées à une autre fonction, telle que l'estimation de canal. Par ailleurs, le procédé de réception correspondant permet notamment une estimation du canal dite à « l'aveugle ».
On décrit ci-après en relation avec la figure 1, le schéma général de traitement d'un signal OFDM visant à réduire le PAPR. Un signal OFDM est, selon le mode de réalisation tel que décrit par le schéma général en relation avec la figure 1, traité selon une succession d'étapes :

à l'émission :

- génération 101 de données source ;
- codage et entrelacement 102 desdites données délivrant des données entrelacées ;
- modulation desdites données entrelacées 103 par exemple selon une modulation QAM ;
- modulation OFDM 104 mettant notamment en ouvre une transformée de Fourier rapide inverse (IFFT de l'anglais « Inverse Fast Fourier Transform ») délivrant des symboles OFDM;
- correction 105 des symboles OFDM visant à réduire le PAPR ;
- insertion 106 d'un intervalle garde dudit signal OFDM constitués desdits symbole
- amplification 107 dudit signal OFDM ;
- transmission 108 dudit signal OFDM sur un canal de transmission;

et à la réception :

- réception 109 et extraction de l'intervalle de garde délivrant un signal dit reçu ;
- démodulation 110 OFDM dudit signal reçu mettant en oeuvre une transformée de Fourier rapide (FFT pour « Fast Fourier Transform » en anglais) délivrant un signal reçu transformé;
- détermination 111 des porteuses pilotes dudit signal reçu transformé;
- estimation de canal 112 ;
- démodulation 113 dudit signal reçu transformé délivrant un signal démodulé ;
- désentrelacement et décodage 114 dudit signal démodulé.

Plus précisément, on utilise, selon un mode de réalisation particulier adapté par exemple à un système de télévision numérique terrestre européen DVB-T, dans le cas où chaque symbole OFDM est composé de $N = 2048$ sous-porteuses (mode $2K$). L'ensemble de ces 2048 porteuses constituant le symbole OFDM comprend des sous-porteuses dites « non-utilisées » respectant un masque selon un standard de transmission et des sous-porteuses utiles telles que le nombre de sous-porteuses utiles est $N = 1705$, les sous-porteuses utiles faisant référence aux sous-porteuses de données et aux sous-porteuses pilotes. Chacune des sous-porteuses pilotes réservées à la réduction du PAPR aura une puissance maximale telle qu'elle soit égale à 10 fois la puissance d'une sous-porteuse de donnée ($\Gamma_{max} = 10\ dB + \Gamma_0$ où $\Gamma_0$ correspond à la puissance d'une sous-porteuse de donnée). L'emplacement dans l'espace temps-fréquence et une valeur de référence desdites sous-porteuses pilotes sont connus et propres à l'application visée, par exemple, de manière illustrative et non limitative, le mode 2K de la nonne DVB-T.

Par ailleurs, une modulation d'amplitude en quadrature 16-QAM est utilisée pour les données d'information. Un facteur de suréchantillonage $L = 4$ est appliqué. Par ailleurs un amplificateur non linéaire de type SSPA (*Solid State Power Amplifier*) peut par exemple être considéré utilisant le modèle de Rapp.

On peut par exemple définir les symboles complexes $X = \begin{bmatrix} X_0 ... X_{N-1} \end{bmatrix}_{1 \times N}^T$ représentant les données d'information émises. On note $x = \begin{bmatrix} x_0 ... x_{N-1} \end{bmatrix}_{1 \times N}^T$ leurs transformées de Fourier inverse. Le signal OFDM équivalent en bande de base s'écrit :

$$x(t) = \frac{1}{\sqrt{N}} \sum_{k=0}^{N-1} X_k e^{\frac{j2\pi kt}{TN}} \qquad 0 \le t < NT , \qquad (1)$$

où $j = \sqrt{-1}$ , $N$ représente le nombre de porteuses orthogonales et $T$ la durée du symbole complexe. En pratique, on considère uniquement $NL$ échantillons équidistants de x(t), avec $L$, le facteur de suréchantillonage tel que décrit ci-dessus. Le signal suréchantillonné est représenté par :

$$x_n(t) = \frac{1}{\sqrt{NL}} \sum_{k=0}^{N-1} X_k e^{\frac{j2\pi nk}{NL}} , \quad \forall n \in \begin{bmatrix} 0,...,NL-1 \end{bmatrix} \qquad (2)$$

Pour une valeur de $L$ suffisamment grande le PAPR d'un signal OFDM est donné par la relation suivante :

$$PAPR\{x(t)\} \approx PAPR\{x_L, L \ge 4\} = \frac{\max_{0 \le n \le NL-1} |x_n|^2}{E\{|X_L|^2\}} \qquad (3)$$

avec

$$x_L = Q_L X_L , \qquad (4)$$

où E{.} désigne l'espérance mathématique, $X_L = \begin{bmatrix} X_0 ... X_{\frac{N}{2}-1} \underbrace{0.....0}_{L} X_{\frac{N}{2}} ... X_{N-1} \end{bmatrix}_{1 \times NL}^T$ et $Q_L$ est la matrice de transformée de Fourier discrète inverse ou IFFT (de l'anglais « Inverse *Fast Fourier Transform* »), définie par la relation :

$$Q_L = \frac{1}{\sqrt{N}} \begin{bmatrix} 1 & 1 & \vdots & 1 \\ 1 & e^{\frac{j2\pi}{NL}1.1} & \vdots & e^{\frac{j2\pi}{NL}1.(NL-1)} \\ \vdots & \vdots & \vdots & \vdots \\ 1 & e^{\frac{j2\pi}{NL}(NL-1).1} & \vdots & e^{\frac{j2\pi}{NL}(NL-1).(NL-1)} \end{bmatrix}_{NL \times NL} \qquad (5)$$

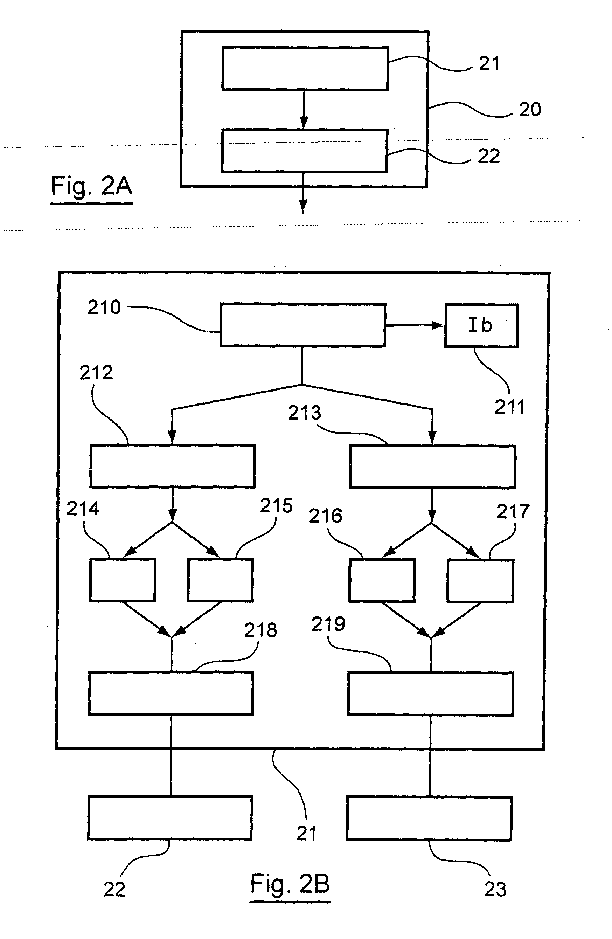

On présente en relation avec la figure 2 les principales étapes du procédé de transmission selon l'invention.

Le procédé de transmission mis en oeuvre par l'invention vise à réduire le PAPR, et met en oeuvre une approche nouvelle et inventive de l'étape 105 en relation avec la figure 1.

Son principe consiste à ajouter au signal temporel original *x*, un signal correcteur *c* permettant de réduire son PAPR. Ainsi le signal résultant vérifie la relation *PAPR(x+ c) < PAPR(x)*. Il peut s'écrire comme suit :

$$x_n + c_n = \frac{1}{\sqrt{NL}} \sum_{k=0}^{N-1} (X_k + C_k) e^{\frac{j2\pi nk}{NL}} \qquad \forall n \in \left[0,...,NL-1\right] \qquad (6)$$

Le signal c est calculé en se basant sur les caractéristiques du signal x et en utilisant une technique d'optimisation.

Ainsi la technique de correction selon l'invention met en oeuvre une étape 20 de modification, pour un symbole donné, de la valeur de référence d'au moins un sous-ensemble des sous-porteuses pilotes, ledit sous-ensemble correspondant dans le cas de la nonne DVB-T à un sous-ensemble des sous-porteuses pilotes dédiées à l'estimation de canal, à l'aide d'une donnée de correction c de la phase et/ou de l'amplitude pour chacune des sous-porteuses pilotes dudit sous-ensemble de façon à minimiser le PAPR.

En relation avec la figure 2A, cette étape 20 de modification est composée d'une étape 21 de détermination des données de correction et d'une étape de modification 22 de la valeur de référence des sous-porteuses pilotes dudit sous-ensemble.

Soit $R = \{0,...,N - 1\}$ l'ensemble des indices de toutes les porteuses (porteuses de données et porteuses pilotes), $R_d = \{0,...,N_d -1\} \subset R$ celui des porteuses de données et $R_p = \{0,...,N_p -1\} \subset R$ celui des sous-porteuses pilotes. On a donc $N = N_d + N_p$.

Par ailleurs, on définit le sous-ensemble des sous-porteuses pilotes dédiées simultanément à la réduction du PAPR et à l'estimation de canal par les indices de $R_r$ tel que $R_p = \{0,...,N_r - 1\} \subset R_p$.

L'étape 21 consiste à minimiser le *PAPR(x+c)* sous la contrainte que le signal temporel c, ou bien l'information fréquentielle *C* soient optimisés de manière à pouvoir être détectés « aveuglément » à la réception. Plus précisément, cette étape consiste à résoudre le problème d'optimisation convexe suivant :

$$\text{Minimiser} \quad \beta$$

$$\text{sous contrainte} \quad \left\| x_n + q_{n,L}^{row} C \right\| \le \beta, \qquad 0 \le n \le NL - 1 \qquad (7)$$

$$\left\| C_k \right\| \le \sqrt{\Gamma_{max}} \, , \, k \in R_r$$

$$C_{k+1} = f(C_k) \, , \, k \in R_r ,$$

où la fonction *f(.)* définit une loi déterministe, et $\Gamma_{max} = 10\ dB$.

Selon un mode de réalisation, la technique d'optimisation met en oeuvre un algorithme d'optimisation convexe de type SOCP (de l'anglais « *Second Order Cone Programming* »). Les outils de simulation Yalmip et Tomlab sont par exemple (de manière non limitative) des outils que l'on peut utiliser sous le logiciel Matlab (marque déposée).

Cet algorithme met en oeuvre les sous-étapes suivante

- une sous-étape de calcul d'un paramètre de correction initial $C_0$ appliqué à la première sous-porteuse pilote dédiée à l'estimation de canal $P_0$ de $N_r$ selon l'axe fréquentiel dudit sous-ensemble desdites sous-porteuses pilotes dédiées à l'estimation du canal, et/ou
- une sous-étape de calcul d'un paramètre de transition $\Delta$, définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation du canal, ledit paramètre de correction initiale $C_0$ et ledit paramètre de transition $\Delta$, étant choisis de façon à minimiser le PAPR,
- une sous-étape d'obtention desdites données de correction, l'ensemble des $C_k$, à partir dudit paramètre de correction initiale $C_0$ et dudit paramètre de transition $\Delta$,

de façon à ce que lesdites données de correction prennent au moins trois valeurs distinctes, la transition $\Delta$ entre les valeurs de deux sous-porteuses pilotes dédiées à l'estimation de canal successives selon l'axe fréquentiel étant constante.

La modification des porteuses pilotes visant à réduire le PAPR est ensuite effectuée (22) et consiste à affecter aux porteuses pilotes dudit sous-ensemble desdites sous-porteuses pilotes dédiées à l'estimation du canal, les données de correction pouvant réduire le PAPR. L'opération s'effectue sous forme d'ajout de signal dans le domaine temporel.

La figure 2B décrit la mise en oeuvre de l'étape 21 selon deux modes indépendants de réalisation particuliers.

En effet, la transition entre deux desdites sous-porteuses pilotes dédiées à l'estimation de canal successives selon l'axe fréquentiel est constante et met en oeuvre la fonction *f(.)* définissant une loi déterministe de transition appartenant au groupe comprenant :

- les lois de transition multiplicative,
- les lois de transition additive.

Il est également possible de mettre en ouvre une loi de transition sous la forme d'une combinaison de lois de transition multiplicative et/ou additive.

Une étape 210 est préalablement mise en oeuvre, déterminant ladite loi de transition appliquée pour un symbole de donnée ou une série de symboles de donnée.

Selon un mode de réalisation préférentiel, l'émetteur et le récepteur peuvent fonctionner avec une unique loi de transition prédéterminée (additive ou multiplicative pour l'ensemble des symboles), ne nécessitant pas la transmission d'information supplémentaire.

L'étape 210 délivre de manière facultative 211 une information binaire de choix Ib qui pourra être transmise au sein du signal, selon le mode de réalisation particulier représenté sur la figure 2B.

*4.2 Description d'un mode de réalisation particulier, mettant en oeuvre une loi de transition multiplicative.*

On décrit ci-après un mode de réalisation particulier de l'invention mettant en oeuvre une loi de transition multiplicative. Selon ce mode de réalisation, la fonction *f(.)* (équation (7)), définit une relation entre les données de correction $C_k$ appliquées aux sous porteuses pilotes dédiées à l'estimation de canal, telle que :

$$C_{k+1} = C_k \times \Delta , \qquad k \in R_r \qquad (8)$$

Le problème d'optimisation représenté par l'équation (7) devient alors :

$$\text{Minimiser} \qquad \beta$$
$$\text{sous contrainte } \left\| x_n + q_{n,L}^{row} C \right\| \leq \beta, \qquad 0 \leq n \leq NL - 1 \qquad (9)$$
$$\left\| C_k \right\| \leq \sqrt{\Gamma_{\max}} , \, k \in R_r$$
$$C_{k+1} = C_k \times \Delta , \, k \in R_r ,$$

Ainsi en relation avec la figure 2B, une fois le choix 210 de la loi de transition multiplicative effectuée, l'algorithme d'optimisation est mis en oeuvre (212).

L'algorithme calcule et délivre 214 le paramètre de correction initial $C_0$ appliqué à la première sous-porteuse pilote dédiée à l'estimation de canal $P_0$ de $N_r$ selon l'axe fréquentiel dudit sous-ensemble desdites sous-porteuses pilotes dédiées à l'estimation de canal d'une part, et calcule et délivre 215 le paramètre de transition $\Delta$, définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal d'autre part.

Une fois ces deux paramètres de correction obtenus, l'ensemble des $C_k$ est calculé 218, ce qui marque la fin de l'étape de détermination des paramètres de correction 21.

La modification des porteuses pilotes dédiées à l'estimation de canal visant à réduire le PAPR est ensuite effectuée (22).

La variable de transition $\Delta$ est constante pour un symbole OFDM donné et peut représenter une variation appartenant au groupe :

- variation d'amplitude ;
- variation de phase ;
- variation de phase et d'amplitude.

*4.3 Description d'un mode de réalisation particulier mettant en oeuvre une loi de transition additive.*

On décrit ci-après un mode de réalisation particulier de l'invention mettant en oeuvre une loi de transition additive. Selon ce mode de réalisation, la fonction *f(.)* (équation (7)), définit une relation entre les données de correction $C_k$ appliquées aux sous porteuses pilotes dédiées à l'estimation de canal, telle que :

$$C_{k+1} = C_k + \Delta, \qquad k \in R_r \qquad \text{(8 bis)}$$

Le problème d'optimisation représenté par l'équation (7) devient alors :

$$\text{Minimiser} \qquad \beta$$
$$\text{sous contrainte } \left\| x_n + q_{n,L}^{row} C \right\| \leq \beta, \qquad 0 \leq n \leq NL - 1 \qquad \text{(9 bis)}$$
$$\left\| C_k \right\| \leq \sqrt{\Gamma}, \qquad k \in R_r$$
$$C_{k+1} = C_k + \Delta, \; k \in R_r,$$

Ainsi en relation avec la figure 2B, une fois le choix 210 de la loi de transition additive effectuée, l'algorithme d'optimisation est mis en oeuvre (213).

L'algorithme calcule et délivre 216 le paramètre de correction initial $C_0$ appliqué à la première sous-porteuse pilote dédiée à l'estimation de canal $P_0$ de $N_r$ selon l'axe fréquentiel dudit sous-ensemble desdites sous-porteuses pilotes dédiées à l'estimation de canal d'une part, et calcule et délivre 217 le paramètre de transition $\Delta$, définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal d'autre part.

Une fois ces deux paramètres de correction obtenus, l'ensemble des $C_k$ est calculé 219, ce qui marque la fin de l'étape de détermination des paramètres de correction 21.

La modification des porteuses pilotes dédiées à l'estimation de canal visant à réduire le PAPR est ensuite effectuée (22).

*4.4 Description d'autres variantes de réalisation du procédé de transmission.*

D'autres variantes peuvent être mises en oeuvre, par exemple on peut considérer que l'un des paramètres de correction ($C_0$ ou $\Delta$) est fixé avant de lancer l'algorithme d'optimisation.

Par ailleurs, il est également possible de mettre en oeuvre une loi de transition sous la forme d'une combinaison de lois de transition multiplicative et/ou additive.

Par ailleurs, une autre variante consiste à imposer une contrainte supplémentaire au problème d'optimisation de manière à ce que lesdites données de correction, ledit paramètre de correction initiale et/ou ledit paramètre de transition soient définis avec un pas prédéterminé et/ou choisi parmi un ensemble de valeurs prédéterminées.

Par exemple, si l'on considère des données de correction de la phase desdites sous-porteuses pilotes dédiées à l'estimation de canal, on peut envisager un ensemble de valeurs de correction discrètes variant de 5° en 5°, ou encore que cet ensemble est choisi dans un ensemble de valeurs entières.

L'annexe A, qui fait partie intégrante de la présente description, propose un exemple pratique de mode de réalisation de l'invention selon que l'on choisit une loi de transition additive ou multiplicative, et que l'on fixe ou non l'un des paramètres de correction. Dans chacun des cas illustrés, au moins trois valeurs distinctes de $C_k$ sont obtenues.

*4.5 Description du signal selon l'invention*

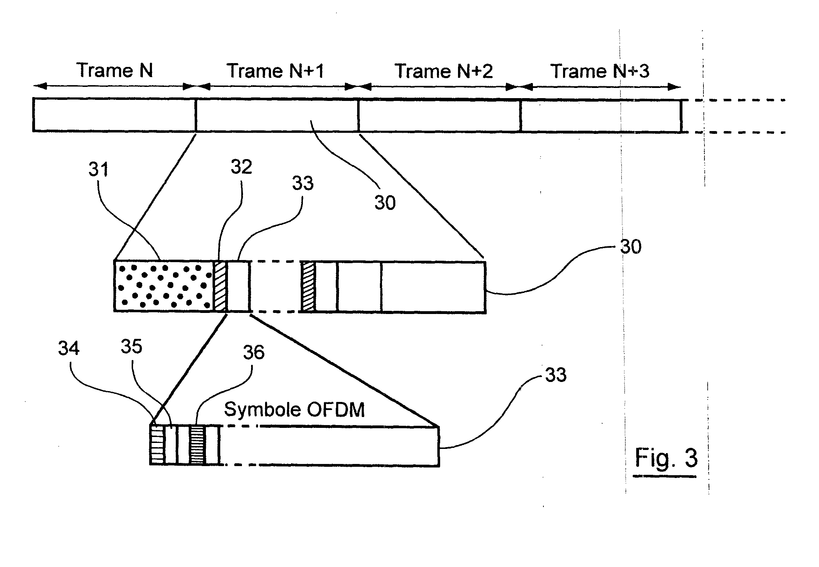

La figure 3 illustre un exemple de trame 30 du signal multiporteuse transmis selon un mode de réalisation particulier de l'invention. Une telle trame comprend un ou plusieurs en-tête 31 contenant des informations connues du récepteur et de l'émetteur (par exemple de taille équivalente à 2 symboles) et des symboles nmltiporteuse 33. Ces symboles utiles 33 sont chacun précédés d'un intervalle de garde 32.

Ainsi :

- à un instant t, le premier symbole de l'en-tête 31 est émis, puis
- à un instant $t + T_0$, le deuxième symbole de l'en-tête 31 est émis, puis
- à un instant $t + 2T_0$, le premier symbole utile 33 accompagné de l'intervalle de garde 32 est émis, puis
- à un instant $t + 3T_0$, le deuxième symbole utile 33 accompagné de l'intervalle de garde 32 est émis,
- etc,

avec $T_0$ la durée d'un symbole multiporteuse en sortie du modulateur.

Par ailleurs, chaque symbole multiporteuse 33 est composé d'un ensemble de sous-porteuses, l'ensemble des sous-porteuses utiles étant composé des sous-porteuses de données 35 et de sous-porteuses pilotes 36.

Selon un mode de réalisation préférentiel, non représenté sur la figure 3, l'émetteur et le récepteur peuvent fonctionner avec une unique loi de transition prédéterminée (additive ou multiplicative pour l'ensemble des symboles), ne nécessitant pas la transmission d'information supplémentaire au sein du signal.

De plus, selon un mode particulier de réalisation de l'invention, le symbole OFDM détaillé en figure 3 peut contenir facultativement une information binaire 34 de choix de la loi de transition choisie à l'émission.

Par ailleurs, selon des variantes de mode de réalisation, non représentées, le signal peut également contenir au moins une information appartenant au groupe comprenant :

- une information représentative dudit paramètre de correction initiale ;
- une information représentative dudit paramètre de transition ;
- une information binaire représentative du choix d'une loi de transition entre deux desdites sous-porteuses pilotes dédiées à l'estimation de canal dudit sous-ensemble.

Par exemple, si l'on considère le deuxième cas de l'annexe A qui utilise une loi de transition multiplicative, la transmission d'un signal contenant pour un symbole donné $\Delta$ et l'information binaire représentative du choix d'une loi de transition entre deux desdites sous-porteuses pilotes dudit sous-ensemble peut être optionnellement envisagée pour accélérer le traitement en réception.

Cependant, l'invention met en oeuvre un procédé de réception capable d'exécuter une estimation dite « à l'aveugle » des données de correction affectées aux pilotes dédiées à l'estimation de canal.

*4.6 Description du procédé de réception Selon l'invention*

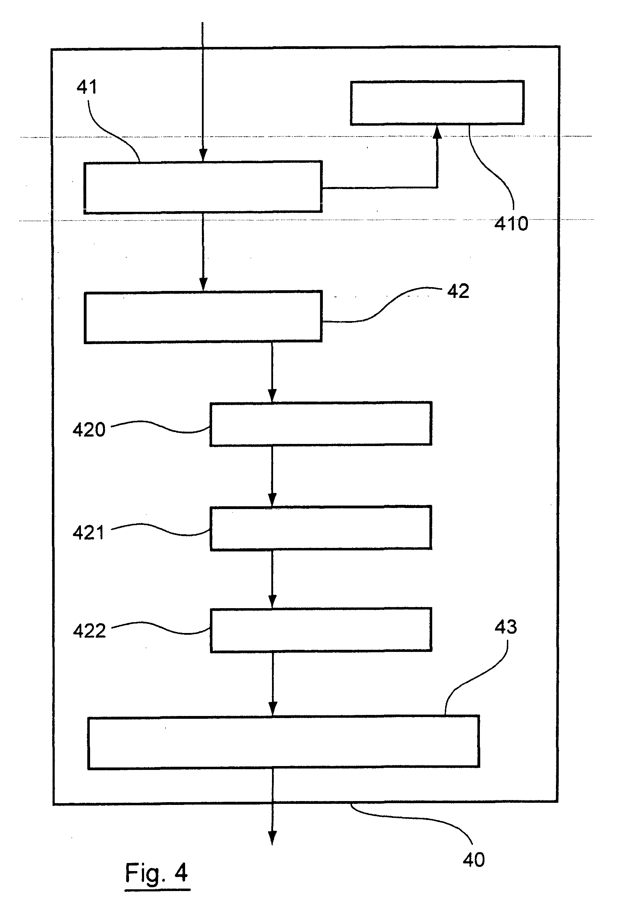

La figure 4 illustre les principales étapes du procédé de réception d'un signal multiporteuse formé d'une succession temporelle de symboles multiporteuses.

Au cours d'une première étape 41, les informations modulant chacune des sous-porteuses sont extraites après une FFT et peuvent être exprimées par la relation suivante :

$$Y = \sum_{k \in R_d} H_k X_k + \sum_{k \in R_p | k \notin R_r} H_k Z_k + \sum_{k \in R_r} H_k C_k + \sum_{k \in R} W_k \qquad (10)$$

où les $(H_k)_{k=0,\ldots,N-1}$ représentent les coefficients fréquentiels du canal de transmission et les $(W_k)_{k=0,\ldots,N-1}$ désignent les composantes du bruit blanc additif gaussien ou AWGN (de l'anglais «*Additive White Gaussian Noise*»), et $(Z_k)_{k \in R_p | k \notin R_r}$ les sous-porteuses pilotes non modifiées à l'émission.

En effectuant l'extraction des porteuses réservées à la réduction du PAPR qui sont également les porteuses pilotes dédiées à une fonction d'estimation de canal par exemple, on obtient les composantes du vecteurs Y suivantes :

$$Y_k = \sum_{k \in R_r} H_k C_k + W_k \qquad (11)$$

Selon un mode de réalisation préférentiel, l'émetteur et le récepteur peuvent fonctionner avec une unique loi de transition prédéterminée (additive ou multiplicative pour l'ensemble des symboles), ne nécessitant pas alors l'existence de l'information binaire représentative du choix d'une loi de transition.

Selon un autre mode de réalisation, on effectue une étape de décodage facultative 410 d'au moins l'information binaire représentative du choix d'une loi de transition.

Ensuite, au cours d'une étape 42 d'analyse de l'ensemble des informations reçues, on détermine une estimation des données de correction appliquées à l'émission.

Pour estimer cette contrainte on effectue par exemple un calcul selon la relation suivante appliquée à une loi de transition multiplicative :

$$\sum_{k \in R_r} \frac{Y_{k+1}}{Y_k} = \frac{H_1 f(C_0)}{H_0 C_0 + W_0} + \frac{H_2 f(C_1)}{H_1 C_1 + W_1} + \ldots + \frac{H_{N_{r-1}} f(C_{N_{r-2}})}{H_{N_{r-2}} C_{N_{r-2}} + W_{N_{r-2}}} + \sum_k \tilde{W}_k \quad (12)$$

où les $(\tilde{W}_k)$ sont des composantes de bruit, on note également par la suite $\Delta = \dfrac{f(C_k)}{C_k}$ le paramètre de transition.

On note $\tilde{\Delta}$ la valeur estimée de $\Delta$, telle que :

$$\tilde{\Delta} = \Delta + \varepsilon \qquad (13)$$

où $\varepsilon$ représente l'erreur d'estimation de $\Delta$. L'équation (12) peut alors être réécrite sous la forme :

$$\sum_{k \in R_r} \frac{Y_{k+1}}{Y_k} = \frac{H_1}{H_0} \tilde{\Delta}_0 + \frac{H_2}{H_1} \tilde{\Delta}_1 + \ldots + \frac{H_{N_{r-1}}}{H_{N_{r-2}}} \tilde{\Delta}_{N_{r-2}} + \sum_k \tilde{W}_k \qquad (14)$$

On peut en déduire une valeur estimée de $\Delta$ en calculant la moyenne (420) comme suit :

$$\frac{1}{N_r - 1} \sum_{k \in R_r} \frac{Y_{k+1}}{Y_k} = \tilde{\Delta} \left( \frac{1}{N_r - 1} \sum_{k \in R_r} \frac{H_{k+1}}{H_k} \right) + \frac{1}{N_r - 1} \sum_k \tilde{W}_k \qquad (15)$$

Une fois $\Delta$ estimé, les composantes $C_k$ peuvent à leur tour être estimées (421 et 422), en utilisant les relations suivantes :

$$\left( \tilde{C}_k \right)_{k=0} = \frac{\sum_{k \in R_r} Y_k}{1 + \tilde{\Delta} + \tilde{\Delta}^2 + \ldots + \tilde{\Delta}^{N_r - 1}} \qquad (16)$$

$$\left( \tilde{C}_k \right)_{k \in R_{r,k \neq 0}} = \tilde{C}_{k-1} \tilde{\Delta} \qquad (17)$$

Le paramètre de correction initial $\tilde{C}_0$ appliqué à la première sous-porteuse pilote est obtenu selon l'étape 421 mettant en oeuvre l'équation (16). A partir de $\tilde{C}_0$ et $\tilde{\Delta}$, l'ensemble des paramètres de correction appliqués à toutes les autres sous-porteuses pilotes $(\tilde{C}_k)_{k \in R_{r,k \neq 0}}$ est ensuite obtenu selon l'étape 422 mettant en oeuvre l'équation (17).

Pour estimer cette contrainte on peut également effectuer un calcul selon la relation suivante appliquée à une loi de transition additive :

$$\sum_{k \in R_r} (Y_{k+1} - Y_k) = (C_1 - C_0) + \ldots + (C_{N_r - 1} - C_{N_r - 2}) + (W_1 - W_0) + \ldots + (W_{N_r - 1} - W_{N_r - 2})$$

$$= (N_r - 1)\Delta + \sum_k \tilde{W}_k \qquad (12 \text{ bis})$$

où les $(\tilde{W}_k)$ sont des composantes de bruit.

On note également $\tilde{\Delta}$ la valeur estimée de $\Delta$, telle que :

$$\tilde{\Delta} = \Delta + \varepsilon \qquad (13 \text{ bis})$$

où ε représente l'erreur d'estimation de Δ. On peut en déduire une valeur estimée de Δ en calculant la moyenne (420), l'équation (12 bis) peut alors être réécrite sous la forme :

$$\Delta \approx \tilde{\Delta} = \frac{1}{N_r - 1}(\sum_{k \in R_r}(Y_{k+1} - Y_k)) \quad (15 \text{ bis})$$

On peut écrire cette relation si la moyenne des composantes du bruit tend vers zéro, c'est-à-dire si

$$\frac{1}{N_r - 1}(\sum_k \tilde{W}_k) \approx 0.$$

Une fois Δ estimé, les composantes $C_k$ peuvent à leur tour être estimées (421 et 422), en utilisant les relations suivantes :

$$\tilde{C}_0 = \frac{(\sum_{k \in R_r} Y_k) - \tilde{\Delta}\sum_{k=1}^{N_r-1} k}{N_r} \quad (16 \text{ bis})$$

$$\tilde{C}_k = \tilde{C}_{k-1} + \tilde{\Delta} \quad \forall k \in R_r, k \neq 0 \quad (17 \text{ bis})$$

Le paramètre de correction initial $\tilde{C}_0$ appliqué à la première sous-porteuse pilote est obtenu selon l'étape 421 mettant en oeuvre l'équation (16 bis). A partir de $\tilde{C}_0$ et $\tilde{\Delta}$, l'ensemble des paramètres de correction appliqués à toutes les autres sous-porteuses pilotes $(\tilde{C}_k)_{k \in R_r, k \neq 0}$ est ensuite obtenu selon l'étape 422 mettant en oeuvre l'équation (17 bis).

Une fois ces paramètres obtenus on peut appliquer une technique d'estimation de canal 43 en utilisant les $(\tilde{C}_k)_{k \in R_r, k \neq 0}$ et l'équation (11).

De manière optionnelle, non représentée, le procédé de réception, selon un mode de réalisation particulier, met en oeuvre à la suite desdites étapes d'extraction, d'analyse, de modification et d'estimation de canal, une étape d'évaluation de l'erreur d'estimation de la modification appliquée audit sous-ensemble desdites sous-porteuses pilotes mettant en oeuvre un calcul de l'erreur quadratique moyenne.

Ce mode de réalisation particulier permet essentiellement d'évaluer les performances du procédé en réception. Par ailleurs, on peut considérer la transmission d'un symbole dit « nul », afin d'évaluer la valeur exacte de la réponse fréquentielle du canal, et intégrer l'erreur d'estimation pour l'estimation de canal du symbole suivant.

L'annexe A, qui fait partie intégrante de la présente description, propose un exemple pratique de mode de réalisation de l'invention selon que l'on choisit une loi de transition additive ou multiplicative, et que l'on fixe ou non l'un des paramètres de correction. Cette annexe illustre également les étapes et les résultats obtenus à la réception.

De nombreux autres modes de réalisation, combinant différents modes de réalisations précédemment cités peuvent également être mis en oeuvre selon le procédé de l'invention.

ANNEXE A

**Exemples pratiques de mode de réalisation**

    ***1er cas : choix d'une loi de transition additive :*** *on considère que Δ et les $C_k$ sont tous des variables d'optimisation.*
    ***2ème cas : choix d'une loi de transition multiplicative:*** *on considère que Δ est fixé et égal à $e^{j2\pi(2*Nb_p)}$ où $Nb_p$ est le nombre de porteuses pilotes dédiées à la réduction du PAPR et dédiées à l'estimation de canal (ici par exemple 8) et seuls les Ck sont des variables d'optimisation.*

**1er cas : la loi de transition additive mise en oeuvre pour deux symboles multiporteuse (OFDM)**

Paramètres de simulation

Canal de type AWGN (canal à bruit blanc gaussien)

| Modulation | : 16QAM |
| L | : 4 |
| Mode FFT | : 2 k |
| Intervalle de Garde | : 1/4 |
| Nombre de sous-porteuses de données | : 1512 |
| $\Gamma_{max}$ | : 10 dB |
| Modèle de l'amplifieateur : SSPA | : p=100, IBO=8.50 dB |
| Rapport signal sur bruit Eb/N0 | : 7 dB |

**Symbole 1**

A l'émission,

| Index de 8 sous-porteuses pilotes dédiés à la réduction du PAPR : | | | | | | | |
|---|---|---|---|---|---|---|---|
| 828 | 840 | 852 | 864 | 876 | 900 | 912 | 924 |

Valeur des données de correction $C_k$ obtenues pour chaque sous-porteuse pilote dédiée à l'estimation de canal =

-1.0924 - 2.6039i
-0.6897 - 1.5143i
-0.2870 - 0.4248i
0.1157 + 0.6648i
0.5184 + 1.7544i
0.9211 + 2.8440i
1.3237 + 3.9336i
1.7264 + 5.0232i

$\Delta$ = 0.4027 + 1.0896i
PAPR du signal avant correction = 9.9245 dB
PAPR du signal après correction selon le procédé de l'invention = 8.6922 dB
A la réception,
$\tilde{\Delta}$ = 0.4088 + 1.1122i
$\tilde{C}_k$ =

-1.1165 - 2.7549i
-0.7076 - 1.6427i
-0.2988 - 0.5305i
0.1100 + 0.5817i
0.5189 + 1.6939i
0.9277 + 2.8061i
1.3365 + 3.9183i
1.7454 + 5.0304i

$\varepsilon$ (erreur d'estimation de $\Delta$ telle que $\varepsilon = \Delta - \tilde{\Delta}$) = -0.0061 - 0.0226i
$|\varepsilon|^2$ (erreur quadratique moyenne) = 5.4797e-004

**Symbole 2**

A l'émission,

| Index de 8 sous-porteuses pilotes dédiés à la réduction du PAPR : | | | | | | | |
|---|---|---|---|---|---|---|---|
| 828 | 840 | 852 | 864 | 876 | 900 | 912 | 924 |

Valeur des données de correction $C_k$ obtenues pour chaque sous-porteuse pilote dédiée à l'estimation de canal =

-1.0526 - 0.2000i
-1.0982 - 0.7397i
-1.1439 - 1.2794i
-1.1895 - 1.8191i
-1.2351 - 2.3589i
-1.2807 - 2.8986i
-1.3263 - 3.4383i
-1.3719 - 3.9780i

$\Delta$ = -0.0456 - 0.5397i
PAPR du signal avant correction = 9.4141 dB
PAPR du signal après correction selon le procédé de l'invention = 8.0749 dB
A la réception,
$\tilde{\Delta}$ = -0.0524 - 0.5338i
$\tilde{C}_k$ =

-1.0605 - 0.2518i
-1.1129 - 0.7856i
-1.1653 - 1.3194i
-1.2177 - 1.8532i
-1.2701 - 2.3870i
-1.3225 - 2.9208i
-1.3749 - 3.4546i
-1.4273 - 3.9884i

$\varepsilon$ (erreur d'estimation de $\Delta$ telle que $\varepsilon = \Delta - \tilde{\Delta}$) = 0.0068 - 0.0059i
$|\varepsilon|^2$ (erreur quadratique moyenne) = 8.1050e-005

***2ème cas : la loi de transition niultiplicative mise en oeuvre pour deux symboles multiporteuse (OFDM)***, *avec $\Delta$ est fixé et égal à $e^{j2\pi/(2*8)}$*

Paramètres de simulation

Canal de type AWGN (canal à bruit blanc gaussien)

| | |
|---|---|
| Modulation | : 16QAM |
| L | : 4 |
| Mode FFT | : 2k |
| Intervalle de Garde | : 1/4 |
| Nombre de sous-porteuses de données | : 1512 |
| $\Gamma_{max}$ | : 10 dB |
| Modèle de l'amplificateur : SSPA | : p=100, IBO=8.50 dB |
| Rapport signal sur bruit Eb/N0 | : 7 dB |

**Symbole 1**

A l'émission,
**[0146]** Index de 8 sous-porteuses pilotes dédiés à la réduction du PAPR :

| 828 | 840 | 852 | 864 | 876 | 900 | 912 | 924 |
|---|---|---|---|---|---|---|---|

Valeur des données de correction $C_k$ obtenues pour chaque sous-porteuse pilote dédiée à l'estimation de canal =

-2.4861 + 1.8234i
-2.7941 + 1.3033i
-2.994 + 0.7332i

-3.0802 + 0.1349i
-3.0473 - 0.4686i
-2.8973 - 1.0541i
-2.6360 - 1.5991i
-2.2734 - 2.0826i

$\Delta$ (fixé à l'émission) = 0.9808 + 0.1951i
PAPR du signal avant correction = 10.2969 dB
PAPR du signal après correction selon le procédé de l'invention = 9.2792 dB

A la réception,

$\tilde{\Delta}$ (le récepteur ne le connaissant pas, il le retrouve par moyennage)= 0.9762 + 0.1974i $C_k$ =

-2.5136 + 1.8617i
-2.8212 + 1.3212i
-3.0148 + 0.7329i
-3.0876 + 0.1204i
-3.0378 - 0.4919i
-2.8684 - 1.0798i
-2.5869 - 1.6203i
-2.2055 - 2.0923i

e (erreur d'estimation de $\Delta$ telle que $\varepsilon = \Delta - \tilde{\Delta}$) = 0.0046 - 0.0023i
$|\varepsilon|^2$ (erreur quadratique moyenne) = 2.6450e-005

**Symbole 2**

A l'émission,

Index de 8 sous-porteuses pilotes dédiés à la réduction du PAPR :

| 828 | 840 | 852 | 864 | 876 | 900 | 912 | 924 |

Valeur des données de correction $C_k$ obtenues pour chaque sous-porteuse pilote dédiée à l'estimation de canal =

1.7448 + 0.9890i
1.5183 + 1.3104i
1.2335 + 1.5814i
0.9013 + 1.7917i
0.5344 + 1.9331i
0.1470 + 2.0002i
-0.2460 + 1.9904i
-0.6296 + 1.9042i

$\Delta$ (fixé à l'émission) = 0.9808 + 0.1951i
PAPR du signal avant correction = 9.7290 dB
PAPR du signal après correction selon le procédé de l'invention = 8.9491 dB

A la réception,

$\Delta$ (le récepteur ne le connaissant pas, il le retrouve par moyennage)= 0.9681 + 0.2029i $\tilde{C}_k$ =

1.8883 + 0.8936i
1.6468 + 1.2481i
1.3410 + 1.5423i
0.9853 + 1.7651i
0.5958 + 1.9086i
0.1896 + 1.9685i
-0.2158 + 1.9441i
-0.6033 + 1.8382i

$\varepsilon$ (erreur d'estimation de $\Delta$ telle que $\varepsilon = \Delta - \tilde{\Delta}$) = 0.0127 - 0.0078i
$|\varepsilon|^2$ (erreur quadratique moyenne) = 2.2213e-004

**Revendications**

1. Procédé de transmission multiporteuse d'un signal représentatif d'un signal source, comprenant des symboles (33) constitués d'un ensemble de sous-porteuses, destinées à être émises simultanément et comprenant des sous-porteuses pilotes dédiées à au moins un traitement d'aide au et/ou d'amélioration du décodage dans au moins un récepteur, et des sous-porteuses de données, l'emplacement dans l'espace temps-fréquence et une valeur de référence desdites sous-porteuses pilotes étant connus du ou des récepteurs,
**caractérisé en ce que** le procédé comprend une phase de modification (20), pour un symbole donné (33), de la valeur de référence d'au moins un sous-ensemble desdites sous-porteuses pilotes, à l'aide d'une donnée de correction de la phase et/ou de l'amplitude pour chacune desdites sous-porteuses pilotes dudit sous-ensemble, de façon à minimiser le rapport puissance crête à puissance moyenne,
lesdites données de correction prenant au moins trois valeurs distinctes, la transition entre les valeurs de deux sous-porteuses pilotes successives dudit sous-ensemble selon l'axe fréquentiel étant constante, ladite transition étant prédéterminée selon une loi de transition multiplicative ou additive.

2. Procédé de transmission selon la revendication 1, **caractérisé en ce que** ledit sous-ensemble desdites sous-porteuses pilotes comprend des sous-porteuses pilotes appartenant à au moins une des catégories suivantes :

   - sous-porteuses pilotes dédiées à la synchronisation ;
   - sous-porteuses pilotes dédiées à l'estimation de canal ;
   - sous-porteuses de signalisation, contenant des informations relatives notamment au type de modulation, au mode de transmission et/ou au rendement de codage.

3. Procédé de transmission selon la revendication 2, **caractérisé en ce qu'**au moins certaines desdites sous-porteuses pilotes sont dédiées à l'estimation de canal, et **en ce qu'**il met en oeuvre les étapes suivantes :

   - détermination (21) desdites données de correction, comprenant au moins pour un symbole donné :

      - une sous-étape de calcul d'un paramètre de correction initial (214, 216) appliqué à une première sous-porteuse pilote dédiée à l'estimation de canal $P_0$ selon l'axe fréquentiel dudit sous-ensemble desdites sous-porteuses pilotes dédiées à l'estimation de canal, et/ou
      - une sous-étape de calcul d'un paramètre de transition (215, 217) définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal,
      ledit paramètre de correction initiale et ledit paramètre de transition étant choisis de façon à minimiser le rapport puissance crête à puissance moyenne,
      - une sous-étape d'obtention desdites données de correction (218, 219) à partir dudit paramètre de correction initiale et dudit paramètre de transition ;

   - modification (22) de la valeur de référence desdites sous-porteuses pilotes dédiées à l'estimation de canal en fonction desdites données de correction, fournissant des valeurs corrigées destinées à moduler lesdites sous-porteuses pilotes, dédiées à l'estimation de canal, dudit sous-ensemble.

4. Procédé de transmission selon la revendication 3, **caractérisé en ce que** ladite sous-étape d'obtention détermine lesdites données de correction en fonction dudit paramètre de correction initiale pour la sous-porteuse pilote dédiée à l'estimation de canal de fréquence la plus faible, et en fonction de la modification appliquée à la sous-porteuse pilote dédiée à l'estimation de canal précédente selon l'axe des fréquences et dudit paramètre de transition, pour les autres sous-porteuses pilotes dédiées à l'estimation de canal.

5. Procédé de transmission selon l'une quelconque des revendications 1 à 4, **caractérisé en ce que** lesdites données de correction, ledit paramètre de correction initiale et/ou ledit paramètre de transition sont définis avec un pas prédéterminé et/ou choisi parmi un ensemble de valeurs prédéterminées.

6. Procédé de transmission selon l'une quelconque des revendications 1 à 5, **caractérisé en ce qu'**il met en oeuvre une étape préalable (210) de choix de ladite loi de transition, pour un symbole donné ou une série de symboles donnée.

7. Procédé de transmission selon la revendication 6, **caractérisé en ce que** ladite étape préalable de choix de ladite loi de transition délivre (211) une information binaire de choix, et **caractérisé en ce qu'**il met en oeuvre une étape de transmission de ladite information de choix.

8. Procédé de transmission selon l'une quelconque des revendications 1 à 7, **caractérisé en ce qu'**une loi de transition multiplicative détermine la modification à appliquer à ladite sous-porteuse pilote dédiée à l'estimation de canal $P_{i+1}$ par multiplication d'un paramètre de correction $C_i$ appliqué à ladite précédente sous-porteuse pilote dédiée à l'estimation de canal $P_i$ selon l'axe fréquentiel par ledit paramètre de transition.

9. Procédé de transmission selon l'une quelconque des revendications 1 à 7, **caractérisé en ce qu'**une loi de transition additive détermine la modification à appliquer à ladite sous-porteuse pilote dédiée à l'estimation de canal $P_{i+1}$ par addition d'un paramètre de correction $C_i$ appliqué à ladite précédente sous-porteuse pilote dédiée à l'estimation de canal $P_i$ selon l'axe fréquentiel par ledit paramètre de transition.

10. Dispositif de transmission multiporteuse d'un signal représentatif d'un signal source, comprenant des symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données, l'emplacement dans l'espace temps-fréquence et une valeur de référence desdites sous-porteuses pilotes étant connus du ou des récepteurs,
   **caractérisé en ce que** le dispositif comprend des moyens de modification, pour un symbole donné, de la valeur de référence d'au moins un sous-ensemble desdites sous-porteuses pilotes, à l'aide d'une donnée de correction de la phase et/ou de l'amplitude pour chacune desdites sous-porteuses pilotes dudit sous-ensemble, de façon à minimiser le rapport puissance crête à puissance moyenne, lesdites données de correction prenant au moins trois valeurs distinctes, la transition entre les valeurs de deux sous-porteuses pilotes successives dudit sous-ensemble selon l'axe fréquentiel étant constante, ladite transition étant prédéterminée selon une loi de transition multiplicative ou additive.

11. Signal multiporteuse obtenu par le procédé de transmission selon l'une quelconque des revendications 2 à 9, comprenant des symboles (33) constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données,
   l'emplacement dans l'espace temps-fréquence et une valeur de référence desdites sous-porteuses pilotes étant connus du ou des récepteurs,
   **caractérisé en ce que**, pour un symbole donné (33), la valeur de référence d'au moins un sous-ensemble de sous-porteuses pilotes dédiées à l'estimation de canal est modifiée, à l'aide d'un paramètre de correction de la phase et/ou de l'amplitude de chacune desdites sous-porteuses pilotes dudit sous-ensemble, de façon à minimiser le rapport puissance crête à puissance moyenne,
   lesdits paramètres de correction prenant au moins trois valeurs distinctes, la transition entre les valeurs de deux sous-porteuses pilotes successives dudit sous-ensemble selon l'axe fréquentiel étant constante, ladite transition étant prédéterminée selon une loi de transition multiplicative ou additive.

12. Signal selon la revendication 11, **caractérisé en ce qu'**il comprend au moins une information d'aide à la réception, parmi les informations appartenant au groupe comprenant :

   - une information représentative dudit paramètre de correction initiale ;
   - une information représentative dudit paramètre de transition ;
   - une information binaire représentative du choix d'une loi de transition entre deux desdites sous-porteuses pilotes dédiées à l'estimation de canal dudit sous-ensemble.

13. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon l'une au moins des revendications 1 à 9, lorsqu'il est exécuté sur un ordinateur.

**14.** Procédé de réception d'un signal selon l'une quelconque des revendications 11 et 12, émis par au moins un émetteur via un canal de transmission,

ledit signal étant formé d'une succession temporelle de symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données,

l'emplacement dans l'espace temps-fréquence et une valeur de référence desdites sous-porteuses pilotes étant connus du ou des récepteurs,

la valeur de référence d'au moins un sous-ensemble desdites sous-porteuses pilotes dédiées à l'estimation de canal étant modifiée, pour un symbole donné, à l'aide d'un paramètre de correction de la phase et/ou de l'amplitude de chacune desdites sous-porteuses pilotes dudit sous-ensemble, de façon à minimiser le rapport puissance crête à puissance moyenne,

lesdits paramètres de correction prenant au moins trois valeurs distinctes, la transition entre les valeurs de deux sous-porteuses pilotes successives dudit sous-ensemble selon l'axe fréquentiel étant constante, ladite transition étant prédéterminée selon une loi de transition multiplicative ou additive,

comprenant les étapes suivantes :

- extraction (41) des informations reçues modulant chacune des sous-porteuses dudit sous-ensemble de sous-porteuses ;
- analyse (42) de l'ensemble desdites informations reçues, de façon à déterminer une estimation desdites données de correction ;
- estimation (43) du canal de transmission à partir desdites données de correction.

**15.** Procédé de réception selon la revendication 14, **caractérisé en ce que** ladite étape d'analyse comprend :

- une étape de détermination (421) d'un paramètre de transition définissant la valeur de transition d'une sous-porteuse pilote dédiée à l'estimation de canal $P_i$ à la sous-porteuse pilote dédiée à l'estimation de canal suivante $P_{i+1}$ selon l'axe fréquentiel dudit sous-ensemble desdites sous-porteuses pilotes dédiées à l'estimation de canal, par analyse de l'ensemble des transitions ; et/ou
- une étape de détermination (422) d'un paramètre de correction initiale $C_0$ appliqué à la première sous-porteuse pilote dédiée à l'estimation de canal $P_0$ selon l'axe fréquentiel dudit sous-ensemble desdites sous-porteuses pilotes dédiées à l'estimation de canal, en fonction de la valeur d'au moins une desdites sous-porteuses pilotes dudit sous-ensemble desdites sous-porteuses pilotes dédiées à l'estimation de canal et du paramètre de transition ;
- une étape de détermination (423) des paramètres de correction appliqués à toutes les autres sous-porteuses pilotes dédiées à l'estimation de canal $P_{i,\ i\neq 0}$ selon l'axe fréquentiel dudit sous-ensemble desdites sous-porteuses pilotes dédiées à l'estimation de canal, en fonction de la valeur du paramètre de correction initiale $C_0$ appliqué à la première sous-porteuse pilote dédiée à l'estimation de canal $P_0$ et de celle du paramètre de transition.

**16.** Procédé de réception selon la revendication 15, **caractérisé en ce qu'**au moins une desdites étape de détermination met en oeuvre un moyennage.

**17.** Procédé de réception selon l'une quelconque des revendications 15 et 16, **caractérisé en ce que**, pour au moins une desdites étape de détermination, ledit paramètre de correction initiale et/ou ledit paramètre de transition est défini avec un pas prédéterminé et/ou choisi parmi un ensemble de valeurs prédéterminées.

**18.** Procédé de réception selon l'une quelconque des revendications 14 à 17, **caractérisé en ce qu'**il comprend une étape préalable de décodage d'au moins une des informations appartenant au groupe comprenant :

- une information représentative dudit paramètre de correction initiale ;
- une information représentative dudit paramètre de transition ;
- une information binaire représentative du choix d'une loi de transition entre deux desdites sous-porteuses pilotes dédiées à l'estimation de canal dudit sous-ensemble.

**19.** Dispositif de réception d'un signal selon l'une quelconque des revendications 11 et 12, émis par au moins un émetteur via un canal de transmission,

ledit signal étant formé d'une succession temporelle de symboles constitués d'un ensemble de sous-porteuses, destinées à être émises simultanément et comprenant des sous-porteuses pilotes dédiées à au moins un traitement d'aide au et/ou d'amélioration du décodage dans au moins un récepteur et des sous-porteuses de données,

l'emplacement dans l'espace temps-fréquence et une valeur de référence desdites sous-porteuses pilotes étant connus du ou des récepteurs,

la valeur de référence d'au moins un sous-ensemble desdites sous-porteuses pilotes dédiées à l'estimation de canal étant modifiée, pour un symbole donné, à l'aide d'un paramètre de correction de la phase et/ou de l'amplitude de chacune desdites sous-porteuses pilotes dudit sous-ensemble, de façon à minimiser le rapport puissance crête à puissance moyenne,

lesdits paramètres de correction prenant au moins trois valeurs distinctes, la transition entre les valeurs de deux sous-porteuses pilotes successives dudit sous-ensemble selon l'axe fréquentiel étant constante, ladite transition étant prédéterminée selon une loi de transition multiplicative ou additive,

**caractérisé en ce qu'**il comprend :

- des moyens d'extraction des informations reçues modulant chacune des sous-porteuses dudit sous-ensemble de porteuses ;
- des moyens d'analyse de l'ensemble desdites informations reçues, de façon à déterminer une estimation desdites données de correction ;
- des moyens d'estimation du canal de transmission à partir desdites données de correction.

**20.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 14 à 18, lorsqu'il est exécuté sur un ordinateur.


**Patentansprüche**

**1.** Mehrträger-Übertragungsverfahren eines für ein Quellensignal repräsentativen Signals, welches Symbole (33) aufweist, bestehend aus einer Menge von Nebenträgern, die gleichzeitig gesendet werden sollen und aus Steuernebenträgern, die mindestens einer Hilfs- und/oder Verbesserungsverarbeitung für das Dekodieren in mindestens einem Empfänger dienen sollen, sowie Daten-Nebenträger aufweisen,

wobei der Ort im Zeit-Frequenz-Raum und ein Referenzwert der besagten Steuernebenträger vom Empfänger bzw. von den Empfängern bekannt sind,

**dadurch gekennzeichnet, dass** das Verfahren eine Änderungsphase (20) des Referenzwertes von mindestens einer Teilmenge der besagten Steuernebenträger, für ein gegebenes Symbol (33), mit Hilfe eines Korrekturdatenwertes der Phase und/oder der Amplitude für jede der besagten Steuernebenträger der besagten Teilmenge aufweist, um das Verhältnis zwischen Spitzenleistung und mittlerer Leistung zu minimieren,

wobei die besagten Korrekturdaten mindestens drei verschiedene Werte annehmen, der Übergang zwischen den Werten zweier aufeinanderfolgender Steuernebenträger der besagten Teilmenge nach der Frequenzachse konstant ist, und der besagte Übergang nach einem multiplikativen oder additiven Überleitungsgesetz gegeben ist.

**2.** Übertragungsverfahren nach Anspruch 1, **dadurch gekennzeichnet, dass** die besagte Teilmenge der besagten Steuernebenträger solche aus mindestens einer der folgenden Kategorien umfasst:

- Steuernebenträger, die der Synchronisierung dienen;
- Steuernebenträger, die der Kanalschätzung dienen;
- Signalisierungs-Nebenträger, die Informationen insbesondere bezüglich der Art der Modulation, der Übertragungsart und/oder der Kodierleistung umfassen.

**3.** Übertragungsverfahren nach Anspruch 2, **dadurch gekennzeichnet, dass** mindestens einige der besagten Steuernebenträger der Kanalschätzung dienen und, dass es die folgenden Schritte anwendet:

- Festlegung (21) der besagten Korrekturdaten, die für mindestens ein gegebenes Symbol folgendes umfassen:

- einen untergeordneten Schritt zum Berechnen eines Ausgangs-Korrekturparameters (214, 216), der auf einen ersten Steuernebenträger P0 angewandt wird, welcher der Kanalschätzung nach der Frequenzachse der besagten Teilmenge besagter Steuernebenträger dienen, die selbst der Kanalschätzung dienen und/oder
- einen untergeordneten Schritt zum Berechnen eines Übergangparameters (215, 217), der den Wert des Übergangs eines Steuernebenträgers, welcher der Kanalschätzung dient, zum Steuernebenträger Pi de-

23

finiert, welcher der nachfolgenden Kanalschätzung nach der Frequenzachse der besagten Teilmenge von Steuernebenträgern Pi+1 dient, die selbst der Kanalschätzung dienen,
- wobei der besagte anfängliche Korrekturparameter und der besagte Übergangsparameter so gewählt werden, dass das Verhältnis von Spitzenleistung zu mittlerer Leistung minimiert wird,
- einen untergeordneten Schritt zum Erzielen der besagten Korrekturdaten (218, 219), ausgehend vom besagten Ausgangs-Korrekturparameter und dem besagten Übergangsparameter;

- Änderung (22) des Referenzwertes der besagten Steuernebenträger, die der Kanalschätzung dienen, abhängig von den besagten Korrekturdaten, die korrigierte Werte liefern, die der Modulation der besagten Steuernebenträger dienen, welche selbst der Kanalschätzung der besagten Teilmenge dienen.

4. Übertragungsverfahren nach Anspruch 3, **dadurch gekennzeichnet, dass** der besagte untergeordnete Schritt zum Erzielen, die besagten Korrekturdaten abhängig von dem besagten anfänglichen Korrekturparameter des Steuernebenträgers, welcher der Schätzung des Kanals mit der schwächsten Frequenz dient, sowie abhängig von der auf den Steuernebenträger angewandten Änderung, die der vorhergehenden Kanalschätzung nach der Frequenzachse dient und von dem besagten Übergangsparameter für die anderen, der Kanalschätzung dienenden Steuernebenträger, festlegt.

5. Übertragungsverfahren nach einem der Ansprüche 1 bis 4, **dadurch gekennzeichnet, dass** die besagten Korrekturdaten, der besagte Ausgangs-Korrekturparameter und/oder der besagte Übergangsparameter mit Hilfe eines vorgegebenen Abstandes festgelegt wird bzw. werden und/oder aus einer Menge vorgegebener Werte gewählt wird bzw. werden.

6. Übertragungsverfahren nach einem der Ansprüche 1 bis 5, **dadurch gekennzeichnet, dass** es einen vorhergehenden Schritt (210) zur Wahl des besagten Übergangsgesetzes für ein gegebenes Symbol oder eine Reihe gegebener Symbole anwendet.

7. Übertragungsverfahren nach Anspruch 6, **dadurch gekennzeichnet, dass** der vorhergehende Schritt zur Wahl des besagten Übergangsgesetzes eine binäre Auswahlinformation liefert (211) und dadurch, dass es einen Übertragungsschritt der besagten Auswahlinformation anwendet.

8. Übertragungsverfahren nach einem der Ansprüche 1 bis 7, **dadurch gekennzeichnet, dass** ein multiplikatives Übergangsgesetz die auf den besagten Steuernebenträger Pi+1 anzuwendende Änderung festlegt, welche der Kanalschätzung dient, durch Multiplizieren eines auf den besagten vorhergehenden, der Kanalschätzung nach der Frequenzachse dienenden Steuernebenträgers Pi angewandten Korrekturparameters Ci, mit dem besagten Übergangsparameter.

9. Übertragungsverfahren nach einem der Ansprüche 1 bis 7, **dadurch gekennzeichnet, dass** ein additives Übergangsgesetz die auf den besagten Steuernebenträger Pi+1 anzuwendende Änderung festlegt, welche der Kanalschätzung dient, durch Addieren eines auf den besagten vorhergehenden, der Kanalschätzung nach der Frequenzachse dienenden Steuernebenträgers angewandten Korrekturparameters Ci, mit dem besagten Übergangsparameter.

10. Mehrträger Übertragungsvorrichtung eines für ein Quellensignal repräsentativen Signals, welches Symbole (33) aufweist, bestehend aus einer Menge von Nebenträgern, die gleichzeitig gesendet werden sollen und aus Steuernebenträgern, die mindestens einer Hilfs- und/oder Verbesserungsverarbeitung für das Dekodieren in mindestens einem Empfänger dienen sollen, sowie Daten-Nebenträger aufweisen,
wobei der Ort im Zeit-Frequenz-Raum und ein Referenzwert der besagten Steuernebenträger vom Empfänger bzw. von den Empfängern bekannt sind,
**dadurch gekennzeichnet, dass** die Vorrichtung über Mittel zum Ändern des Referenzwertes von mindestens einer Teilmenge der besagten Steuernebenträger, für ein gegebenes Symbol, mit Hilfe eines Korrekturdatenwertes der Phase und/oder der Amplitude für jede der besagten Steuernebenträger der besagten Teilmenge aufweist, um das Verhältnis zwischen Spitzenleistung und mittlerer Leistung zu minimieren,
wobei die besagten Korrekturdaten mindestens drei verschiedene Werte annehmen, der Übergang zwischen den Werten zweier aufeinanderfolgender Nebenträger der besagten Teilmenge nach der Frequenzachse konstant ist, und der besagte Übergang nach einem multiplikativen oder additiven Überleitungsgesetz gegeben ist.

11. Mehrträgersignal, das mittels des Übertragungsverfahren nach einem der Ansprüche 2 bis 9 erzielt wird, welches Symbole (33) aufweist, die aus einer Menge von Nebenträgern bestehen und gleichzeitig gesendet werden sollen, und aus Steuernebenträgern, die mindestens einer Hilfs- und/oder Verbesserungsverarbeitung für das Dekodieren in mindestens einem Empfänger dienen sollen sowie Daten-Nebenträger aufweisen,

wobei der Ort im Zeit-Frequenz-Raum und ein Referenzwert der besagten Steuernebenträger vom Empfänger bzw. von den Empfängern bekannt sind,

**dadurch gekennzeichnet, dass** für ein gegebenes Symbol (33), der Referenzwert von mindestens einer Teilmenge von Steuernebenträgern, die der Kanalschätzung dienen, geändert wird, mit Hilfe eines Korrekturparameters der Phase und/oder der Amplitude einer jeden der besagten Steuernebenträger der besagten Teilmenge, so dass das Verhältnis von Spitzenleistung zu mittlerer Leistung minimiert wird,

wobei die besagten Korrekturparameter mindestens drei verschiedene Werte annehmen, der Übergang zwischen den Werten zweier aufeinanderfolgender Nebenträger der besagten Teilmenge nach der Frequenzachse konstant ist, und der besagte Übergang nach einem multiplikativen oder additiven Überleitungsgesetz vorgegeben ist.

12. Signal nach Anspruch 11, **dadurch gekennzeichnet, dass** es mindestens eine Hilfsinformation für den Empfang aufweist, unter den Informationen aus der Gruppe, die folgendes umfasst:

- eine für den besagten anfänglichen Korrekturparameter repräsentative Information;
- eine für den besagten Übergangsparameter repräsentative Information;
- eine Binärinformation, die repräsentativ ist für die Auswahl eines Übergangsgesetzes zwischen zwei der besagten Steuernebenträger, welche der Kanalschätzung der besagten Teilmenge dienen.

13. Produkt, bestehend aus einem EDV-Programm, das von einem Kommunikationsnetz heruntergeladen und/oder auf einem durch einen Rechner lesbaren und/oder durch einen Prozessor zu bearbeitenden Datenträger gespeichert ist, **dadurch gekennzeichnet, dass** es über Programmcodeanweisungen verfügt, um das Übertragungsverfahren nach mindestens einem der Ansprüche 1 bis 9 anzuwenden, wenn es auf einem Rechner ausgeführt wird.

14. Empfangsverfahren eines Signals nach einem der Ansprüche 11 oder 12, das von mindestens einem Sender über einen Sendekanal gesendet wird,

wobei das besagte Signal aus einer zeitlichen Reihenfolge von Symbolen gebildet wird, die aus einer Menge von Nebenträgern bestehen und gleichzeitig gesendet werden sollen, und Steuernebenträger umfasst, die mindestens einer Hilfs- und/oder Verbesserungsverarbeitung für das Dekodieren in mindestens einem Empfänger dienen sollen sowie aus Daten-Nebenträgern gebildet wird,

wobei der Ort im Zeit-Frequenz-Raum und ein Referenzwert der besagten Steuernebenträger vom Empfänger bzw. von den Empfängern bekannt sind,

wobei der Referenzwert von mindestens einer Teilmenge der besagten Steuernebenträger, die der Kanalschätzung dienen, für ein gegebenes Symbol mit Hilfe eines Korrekturparameters der Phase und/oder der Amplitude einer jeden der besagten Steuernebenträger der besagten Teilmenge so geändert werden, dass das Verhältnis zwischen Spitzenleistung und mittlerer Leistung minimiert wird,

wobei die besagten Korrekturparameter mindestens drei verschiedene Werte annehmen, der Übergang zwischen den Werten zweier aufeinanderfolgender Steuernebenträger der besagten Teilmenge nach der Frequenzachse konstant ist, und der besagte Übergang nach einem multiplikativen oder additiven Überleitungsgesetz gegeben ist, wobei das Verfahren die folgenden Schritte aufweist:

- Extrahieren (41) der empfangenen Informationen, die jede der Nebenträger aus der besagten Teilmenge von Nebenträgern modulieren;
- Analysieren (42) der Menge der besagten empfangenen Informationen, um eine Abschätzung der besagten Korrekturdaten festzulegen;
- Schätzen (43) des Übertragungskanals, ausgehend von den besagten Korrekturdaten.

15. Empfangsverfahren nach Anspruch 14, **dadurch gekennzeichnet, dass** der besagte analytische Schritt folgendes umfasst:

- einen Schritt zur Festlegung (421) eines Übergangsparameters, der den Übergangswert von einem der Kanalschätzung dienenden Steuernebenträgers Pi, zu dem Steuernebenträger Pi+ definiert, welcher der nachfolgenden Kanalschätzung 1 nach der Frequenzachse der besagten Teilmenge besagter Steuernebenträger, die der Kanalschätzung dienen sollen, durch Analyse der Menge der Übergänge dient und/oder,
- einen Schritt zur Festlegung (422) eines anfänglichen Korrekturparameters C0, der auf einen ersten Steuernebenträger P0 angewandt wird, welcher der Kanalschätzung nach der Frequenzachse der besagten Teilmenge besagter Steuernebenträger dienen, die selbst der Kanalschätzung dienen, abhängig vom Wert von mindestens einem der besagten Steuernebenträger aus der besagten Teilmenge von besagten Steuernebenträgern, die der Kanalschätzung dienen, und abhängig von dem Übergangsparameter;
- einen Schritt (423) zum Festlegen der Korrekturparameter, die auf allen anderen Steuernebenträgern $P_{i,i\neq0}$ angewendet werden, welche der Kanalschätzung nach der Frequenzachse der besagten Teilmenge von besagten, der Kanalschätzung dienenden Steuernebenträgern dienen, abhängig von dem Wert des anfänglichen Korrekturparameters $C_0$, der auf den ersten Steuernebenträger $P_0$ angewendet wird, welcher der Kanalschätzung dient, und abhängig von dem Übergangsparameter.

16. Empfangsverfahren nach Anspruch 15, **dadurch gekennzeichnet, dass** mindestens einer der besagten Festlegungsschritte die Bildung eines Mittelwertes anwendet.

17. Empfangsverfahren nach einem der Ansprüche 15 oder 16, **dadurch gekennzeichnet, dass** für mindestens einen der besagten Festlegungsschritte der besagte anfänglichen Korrekturparameter und/oder der besagte Übergangsparameter mit Hilfe eines vorgegebenen Abstandes festgelegt wird bzw. werden und/oder aus einer Menge vorgegebener Werte gewählt wird bzw. werden.

18. Empfangsverfahren nach einem der Ansprüche 14 bis 17, **dadurch gekennzeichnet, dass** es einen vorhergehenden Dekodierungsschritt von mindestens einer Information aus der folgendes umfassenden Gruppe aufweist:

- eine für den besagten anfänglichen Korrekturparameter repräsentative Information;
- eine für den besagten Übergangsparameter repräsentative Information;
- eine Binärinformation, die repräsentativ ist für die Auswahl eines Übergangsgesetzes zwischen zwei der besagten Steuernebenträger, welche der Kanalschätzung der besagten Teilmenge dienen.

19. Empfangsvorrichtung eines Signals nach einem der Ansprüche 11 oder 12, das von mindestens einem Sender über einen Sendekanal gesendet wird,
wobei das besagte Signal aus einer zeitlichen Reihenfolge von Symbolen gebildet wird, die aus einer Menge von Nebenträgern bestehen und gleichzeitig gesendet werden sollen, und Steuernebenträger umfasst, die mindestens einer Hilfs- und/oder Verbesserungsverarbeitung für das Dekodieren in mindestens einem Empfänger dienen sollen, sowie aus Daten-Nebenträgern gebildet wird,
wobei der Ort im Zeit-Frequenz-Raum und ein Referenzwert der besagten Steuernebenträger vom Empfänger bzw. von den Empfängern bekannt sind,
wobei der Referenzwert von mindestens einer Teilmenge der besagten, der Kanalschätzung dienenden Steuernebenträger, für ein gegebenes Symbol mit Hilfe eines Korrekturparameters der Phase und/oder der Amplitude einer jeden der besagten Steuernebenträger der besagten Teilmenge so geändert werden, dass das Verhältnis zwischen Spitzenleistung und mittlerer Leistung minimiert wird,
wobei die besagten Korrekturparameter mindestens drei verschiedene Werte annehmen, der Übergang zwischen den Werten zweier aufeinanderfolgender Steuernebenträger der besagten Teilmenge nach der Frequenzachse konstant ist und der besagte Übergang nach einem multiplikativen oder additiven Überleitungsgesetz gegeben ist, **dadurch gekennzeichnet, dass** sie folgendes umfasst:

- Mittel zum Extrahieren der empfangenen Informationen, die jeden Nebenträger aus der besagten Teilmenge von Nebenträgern modulieren;
- Mittel zum Analysieren der Menge der besagten empfangenen Informationen, um eine Abschätzung der besagten Korrekturdaten festzulegen;
- Mittel zum Schätzen des Übertragungskanals, ausgehend von den besagten Korrekturdaten.

20. Produkt, bestehend aus einem EDV-Programm, das von einem Kommunikationsnetz heruntergeladen und/oder auf einem durch einen Rechner lesbaren und/oder durch einen Prozessor zu bearbeitenden Datenträger gespeichert ist, **dadurch gekennzeichnet, dass** es über Programmcodeanweisungen verfügt, um das Empfangsverfahren nach mindestens einem der Ansprüche 14 bis 18 anzuwenden, wenn es auf einem Rechner ausgeführt wird.

**Claims**

1. A method for the multicarrier transmission of a signal representing a source signal, comprising symbols (33) constituted by a set of sub-carriers, designed to be simultaneously transmitted and comprising pilot sub-carriers intended for at least one processing operation for assisting and/or improving the decoding in at least one receiver, and data sub-carriers,

the location in the time-frequency space and a reference value of said pilot sub-carriers being known by the one or more receivers,

**characterised in that** said method comprises a phase (20) for modifying, for a given symbol (33), the reference value of at least one sub-set of said pilot sub-carriers, using data for correcting the phase and/or the amplitude for each of said pilot sub-carriers of said sub-set, so as to minimise the peak-to-average power ratio,

said correction data assuming at least three distinct values, the transition between the values of two successive pilot sub-carriers of said sub-set on the frequency axis being constant, said transition being predetermined according to a multiplicative or additive transition rule.

2. The transmission method according to claim 1, **characterised in that** said sub-set of said pilot sub-carriers comprises pilot sub-carriers belonging to at least one of the following categories:

   - pilot sub-carriers intended for the synchronisation;
   - pilot sub-carriers intended for the channel estimation;
   - signalling sub-carriers containing information particularly relating to the type of modulation, the transmission mode and/or the coding efficiency.

3. The transmission method according to claim 2, **characterised in that** at least some of said pilot sub-carriers are intended for channel estimation, and **in that** it implements the following steps of:

   - determining (21) said correction data, at least comprising for a given symbol:
   - a sub-step of calculating an initial correction parameter (214, 216) applied to a first pilot sub-carrier P0 intended for the channel estimation on the frequency axis of said sub-set of said pilot sub-carriers intended for the channel estimation; and/or
   - a sub-step of calculating a transition parameter (215, 217) defining the transition value from a pilot sub-carrier Pi intended for the channel estimation to the pilot sub-carrier Pi+1 intended for the following channel estimation on the frequency axis of said sub-set of said pilot sub-carriers intended for the channel estimation;

   said initial correction parameter and said transition parameter being selected so as to minimise the peak-to-average power ratio;

   - a sub-step of obtaining said correction data (218, 219) from said initial correction parameter and said transition parameter;
   - modifying (22) the reference value of said pilot sub-carriers intended for the channel estimation as a function of said correction data, supplying corrected values designed to modulate said pilot sub-carriers, intended for the channel estimation, of said sub-set.

4. The transmission method according to claim 3, **characterised in that** said obtaining sub-step determines said correction data as a function of said initial correction parameter for the pilot sub-carrier intended for the channel estimation with the lowest frequency, and as a function of the modification applied to the pilot sub-carrier intended for the preceding channel estimation on the frequency axis and of said transition parameter, for the other pilot sub-carriers intended for the channel estimation.

5. The transmission method according to any one of claims 1 to 4, **characterised in that** said correction data, said initial correction parameter and/or said transition parameter are defined with a pitch predetermined and/or selected from a set of predetermined values.

6. The transmission method according to any one of claims 1 to 5, **characterised in that** it implements a prior step (210) of selecting said transition rule for a given symbol or a series of data symbols.

7. The transmission method according to claim 6, **characterised in that** said prior step of selecting said transition rule delivers (211) binary selection information, and **characterised in that** it implements a step of transmitting said selection information.

8. The transmission method according to any one of claims 1 to 7, **characterised in that** a multiplicative transition rule determines the modification to be applied to said pilot sub-carrier $P_{i+1}$ intended for the channel estimation by the multiplication of a correction parameter $C_i$ applied to said preceding pilot sub-carrier $P_i$ intended for the channel estimation on the frequency axis by said transition parameter.

9. The transmission method according to any one of claims 1 to 7, **characterised in that** an additive transition rule determines the modification to be applied to said pilot sub-carrier $P_{i+1}$ intended for the channel estimation by the addition of a correction parameter $C_i$ applied to said preceding pilot sub-carrier $P_i$ intended for the channel estimation on the frequency axis by said transition parameter.

10. A device for multicarrier transmission of a signal representing a source signal, comprising symbols constituted by a set of sub-carriers, designed to be simultaneously transmitted and comprising pilot sub-carriers intended for at least one processing operation for assisting and/or improving the decoding in at least one receiver, and data sub-carriers,
with the location in the time-frequency space and a reference value of said pilot sub-carriers being known by the one or more receivers,
**characterised in that** said device comprises means for modifying, for a given symbol, the reference value of at least one sub-set of said pilot sub-carriers, using data for correcting the phase and/or the amplitude for each of said pilot sub-carriers of said sub-set, so as to minimise the peak-to-average power ratio, said correction data assuming at least three distinct values, the transition between the values of two successive pilot sub-carriers of said sub-set on the frequency axis being constant, said transition being predetermined according to a multiplicative or additive transition rule.

11. A multicarrier signal obtained by the transmission method according to any one of claims 2 to 9, comprising symbols (33) constituted by a set of sub-carriers, designed to be simultaneously transmitted and comprising pilot sub-carriers intended for at least one processing operation for assisting and/or improving the decoding in at least one receiver, and data sub-carriers,
the location in the time-frequency space and a reference value of said pilot sub-carriers being known by the one or more receivers,
**characterised in that**, for a given symbol (33), the reference value of at least one sub-set of said pilot sub-carriers intended for the channel estimation is modified, using a parameter for correcting the phase and/or the amplitude of each of said pilot sub-carriers of said sub-set, so as to minimise the peak-to-average power ratio, said correction parameters assuming at least three distinct values, the transition between the values of two successive pilot sub-carriers of said sub-set on the frequency axis being constant, said transition being predetermined according to a multiplicative or additive transition rule.

12. The signal according to claim 11, **characterised in that** it comprises at least one item of information for assisting reception from among the information belonging to the group comprising:

- information representing said initial correction parameter;
- information representing said transition parameter;
- binary information representing the selection of a transition rule between two of said pilot sub-carriers intended for the channel estimation of said sub-set.

13. A computer program product that can be downloaded from a communication network and/or stored on a support that can be read by a computer and/or executed by a processor, **characterised in that** it comprises program code instructions for implementing the transmission method according to at least one of claims 1 to 9 when it is executed on a computer.

14. A method for receiving a signal according to any one of claims 11 to 12 transmitted by at least one transmitter via a transmission channel,
said signal being formed from a temporal succession of symbols constituted by a set of sub-carriers, designed to be simultaneously transmitted and comprising pilot sub-carriers intended for at least one processing operation for assisting and/or improving the decoding in at least one receiver, and data sub-carriers,
the location in the time-frequency space and a reference value of said pilot sub-carriers being known by the one or more receivers,
the reference value of at least one sub-set of said pilot sub-carriers intended for the channel estimation being modified, for a given symbol, using a parameter for correcting the phase and/or the amplitude of each of said pilot sub-carriers of said sub-set, so as to minimise the peak-to-average power ratio,
said correction parameters assuming at least three distinct values, the transition between the values of two successive pilot sub-carriers of said sub-set on the frequency axis being constant, said transition being predetermined according to a multiplicative or additive transition rule, comprising the following steps:

- extracting (41) received information modulating each of the sub-carriers of said sub-set of sub-carriers;
- analysing (42) all of said received information so as to determine an estimate of said correction data;
- estimating (43) the transmission channel from said correction data.

15. The reception method according to claim 14, **characterised in that** said analysis step comprises:

- a step (421) of determining a transition parameter defining the transition value from a pilot sub-carrier Pi intended for the channel estimation to the pilot sub-carrier Pi+1 intended for the following channel estimation on the frequency axis of said sub-set of said pilot sub-carriers intended for the channel estimation, by analysing all of the transitions; and/or
- a step (422) of determining an initial correction parameter C0 applied to the first pilot sub-carrier P0 intended for the channel estimation on the frequency axis of said sub-set of said pilot sub-carriers intended for the channel estimation, as a function of the value of at least one of said pilot sub-carriers of said sub-set of said pilot sub-carriers intended for the channel estimation and of the transition parameter;
- a step (423) of determining correction parameters applied to all of the other pilot sub-carriers Pi,i≠0 intended for the channel estimation on the frequency axis of said sub-set of said pilot sub-carriers intended for the channel estimation, as a function of the value of the initial correction parameter C0 applied to the first pilot sub-carrier P0 intended for the channel estimation and of that of the transition parameter.

16. The reception method according to claim 15, **characterised in that** at least one of said determining steps implements averaging.

17. The reception method according to any one of claims 15 to 16, **characterised in that**, for at least one of said determining steps, said initial correction parameter and/or said transition parameter is defined with a predetermined pitch and/or selected from a set of predetermined values.

18. The reception method according to any one of claims 14 to 17, **characterised in that** it comprises a prior step of decoding at least one of the items of information belonging to the group comprising:

- information representing said initial correction parameter;
- information representing said transition parameter;
- binary information representing the selection of a transition rule between two of said pilot sub-carriers intended for the channel estimation of said sub-set.

19. A device for receiving a signal according to any one of claims 11 and 12 transmitted by at least one transmitter via a transmission channel, said signal being formed from a temporal succession of symbols constituted by a set of sub-carriers, designed to be simultaneously transmitted and comprising pilot sub-carriers intended for at least one processing operation for assisting and/or improving the decoding in at least one receiver, and data sub-carriers, the location in the time-frequency space and a reference value of said pilot sub-carriers being known by the one or more receivers, the reference value of at least one sub-set of said pilot sub-carriers intended for the channel estimation being modified, for a given symbol, using a parameter for correcting the phase and/or the amplitude of each of said pilot sub-carriers of said sub-set, so as to minimise the peak-to-average power ratio, said correction parameters assuming at least three distinct values, the transition between the values of two successive pilot sub-carriers of said sub-set on the frequency axis being constant, said transition being predetermined according to a multiplicative or additive transition rule, **characterised in that** it comprises:

- means for extracting received information modulating each of the sub-carriers of said sub-set of sub-carriers;
- means for analysing all of said received information so as to determine an estimate of said correction data;
- means for estimating the transmission channel from said correction data.

20. A computer program product that can be downloaded from a communication network and/or stored on a support that can be read by a computer and/or executed by a processor, **characterised in that** it comprises program code instructions for implementing the reception method according to at least one of claims 14 to 18 when it is executed on a computer.

Fig. 1

## Fig. 2A

## Fig. 2B

Trame N+3  Trame N+2  Trame N+1  Trame N

30

33

30

33

32

31

Symbole OFDM

36

34  35

Fig. 3

32

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MAHAFENO I M et al.** PAPR réduction method for OFDM systems using dedicated subcarriers: a proposal for the future DVB-T standard. *BROADBAND MULTIMEDIA SYSTEMS AND BROADCASTING, 2008 IEEE INTERNATIONAL SYMPOSIUM ON,* 31 Mars 2008, ISBN 978-1-4244-1648-6, 1-3

- **M.J. FERNAUDEZ-GETINO GARCIA ; O. EDFORS ; J.M. PAEZ-BORRALLO.** Peak Power Reduction for OFDM Systems With Orthogonal Pilot Sequence. *IEEE Transactions on Wireless Communications,* Janvier 2006, vol. 5, 47-51